# EUROPEAN PATENT SPECIFICATION

(11) **EP 4 490 936 B1**
(45) Date of publication and mention of the grant of the patent: **30.09.2026**
(21) Application number: 23707965.2
(22) Date of filing: 03.03.2023
(51) Int. Cl.: H04W 24/08

(54) **MESSAGE HANDLING IN A NETWORK**
NACHRICHTENVERARBEITUNG IN EINEM NETZWERK
GESTION DE MESSAGES DANS UN RÉSEAU

(30) Priority: 11.03.2022 EP 22382233
(43) Date of publication of application: 15.01.2025
(73) Proprietor: Telefonaktiebolaget LM Ericsson (publ), 164 83 Stockholm (SE)
(72) Inventor: RODRIGO, Maria Cruz Bartolome, 28189 Torremocha de Jarama Madrid (ES); DE LA CRUZ, Pablo Martinez, 28045 Madrid (ES); ZHANG, Xinyu, Shanghai 200335 (CN); LU, Yunjie, Shanghai 200335 (CN)
(74) Representative: Ericsson
(86) International application number: PCT/EP2023/055438
(87) International publication number: WO 2023/169952

(56) References cited:
- US-A1- 2019 230 012
- US-A1- 2020 177 457
- US-A1- 2020 313 996

## Description

### Technical Field

The disclosure relates to methods for handling messages in a network and nodes configured to operate in accordance with those methods.

### Background

There exist various techniques for handling messages in a network. Generally, the term "client" can be used to refer to a sender of a message in a network and the term "server" can be used to refer to a receiver of a message in a network.

An example of a message in a network is a request in the network, such as a request for a service (i.e. a service request) in the network or a request for a notification (i.e. a notification request) in the network. A service request is generally from a consumer of the service ("service consumer") to a producer of the service ("service producer"). For example, a service request may be from a network function (NF) node of a service consumer to an NF node of a service producer. The NF node of the service consumer and the NF node of the service producer can communicate directly or indirectly. This is referred to as direct communication and indirect communication respectively. In the case of indirect communication, the NF node of the service consumer and the NF node of the service producer may communicate via a service communication proxy (SCP) node.

Thus, for a regular request such as a service request, a client may refer to an NF node of a service consumer and/or an SCP, and a server may refer to an NF node of a service producer and/or an SCP. For a notification request, a client may refer to an NF node of a service producer and/or an SCP, and a server may refer to an NF node of a service consumer and/or an SCP.

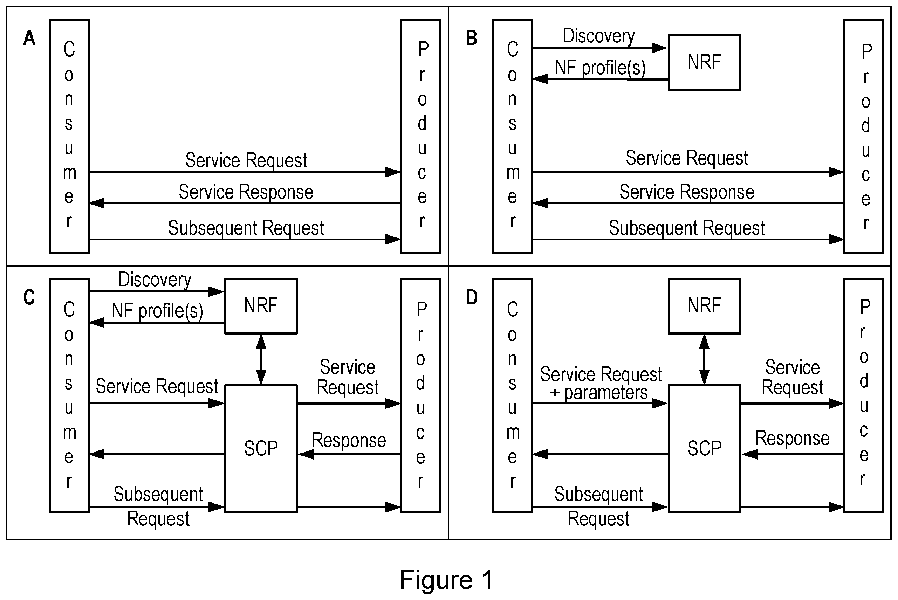

Figure 1A-D illustrates different existing systems for handling service requests, as set out in 3GPP TS 23.501 V17.3.0. In more detail, Figures 1A and 1B illustrate systems that use direct communication, while Figures 1C and 1D illustrate systems that use indirect communication.

In the systems illustrated in Figures 1A and 1B, a service request is sent directly from the NF node of the service consumer to the NF node of the service producer. A response to the service request is sent directly from the NF node of the service producer to the NF node of the service consumer. Similarly, any subsequent service requests are sent directly from the NF node of the service consumer to the NF node of the service producer. The system illustrated in Figure 1B also comprises a network repository function (NRF) node. Thus, in the system illustrated in Figure 1B, the NF node of the service consumer can query the NRF node to discover suitable NF nodes of the service producer to which to send the service request. In response to such a query, the NF node of the service consumer can receive an NF profile for one or more NF nodes of the service producer and, based on the received NF profile(s) can select an NF node of the service producer to which to send the service request. In the system illustrated in Figure 1A, the NRF node is not used and instead the NF node of the service consumer may be configured with the NF profile(s) of the NF node(s) of the service producer.

In the systems illustrated in Figures 1C and 1D, a service request is sent indirectly from the NF node of the service consumer to the NF node of the service producer via a service communication proxy (SCP) node. A response to the service request is sent indirectly from the NF node of the service producer to the NF node of the service consumer via the SCP node. Similarly, any subsequent service requests are sent indirectly from the NF node of the service consumer to the NF node of the service producer via the SCP node. The systems illustrated in Figures 1C and 1D also comprise an NRF node.

In the system illustrated in Figure 1C, the NF node of the service consumer can query the NRF node to discover suitable NF nodes of the service producer to which to send the service request. In response to such a query, the NF node of the service consumer can receive an NF profile for one or more NF nodes of the service producer and, based on the received NF profile(s) can select an NF node of the service producer to which to send the service request. In this case, the service request sent from the NF node of the service consumer to the SCP node comprises the address of the selected NF node of the service producer. The NF node of the service consumer can forward the service request without performing any further discovery or selection. In case the selected NF node of the service producer is not accessible for any reason, it may be up to the NF node of the service consumer to find an alternative. In other cases, the SCP node may communicate with the NRF node to acquire selection parameters (e.g. location, capacity, etc.) and the SCP node may select an NF node of the service producer to which to send the service request.

In the system illustrated in Figure 1D, the NF node of the service consumer does not carry out the discovery or selection process. Instead, the NF node of the service consumer adds any necessary discovery and selection parameters (required to find a suitable NF node of the service producer) to the service request that it sends via the SCP node. The SCP node uses the request address and the discovery and selection parameters in the service request to route the service request to a suitable NF node of the service producer. Thus, in the system illustrated in Figure 1D, where indirect communication with delegated discovery is used, the NF node of the service consumer sends the service request to the SCP node and provides within the service request to the SCP node the discovery and selection parameters necessary to discover and select an NF node of a service producer. The SCP node can perform discovery with the NRF node to discover a target NF node of the service producer to which to route the service request. The SCP node can discover a target NF node of the service producer in the manner indicated in 3GPP TS 23.502 V17.3.0.

For the fifth generation core (5GC), from Release 16, the SCP node is included as a network element to allow indirect communication between an NF node of a service consumer and an NF node of a service producer. That is, the SCP node can be used in indirect routing scenarios. The indirect communication that is used can be either of the two indirect communications options described earlier with reference to Figures 1C and 1D. In the 5GC, the SCP node can be an NF node that provides centralised capabilities, such as service based interface (SBI) routing, NF discovery and selection, failover, message screening, etc.

In some scenarios, a client (e.g. an NF node of a service consumer) may need to initially select and/or reselect (e.g. in case of a failure) a server (e.g. an NF node of a service producer) among a possible plurality of (e.g. functionally equivalent) server instances. Commonly, this selection and/or reselection can be performed based on server characteristics (or properties). These characteristics may be any one or more of those that are defined in a profile of the server. The characteristics can include, for example, server instance, server service instance priority, locality, capacity, and/or load, etc.

In existing techniques, customers can request that an NF (e.g. service) instance upgrade (such as a software upgrade) is tested and this can be with a controlled amount of traffic. For example, it may be that full traffic towards an upgraded NF (e.g. service) instance is only considered once stability has been proven via testing. In this example, the testing is performed at NF (e.g. service) instance level. Testing with a controlled amount of traffic can be referred to as "canary testing".

Document US 2019/230012 A1 discloses a speed testing service which can be triggered via an API request, in response to which a test request to a network device is generated. The network device is configured to schedule the test based on the test request, perform the test and generate and transmit a test response providing test results. An appropriate test device may be selected via a database lookup based on e.g. load balancing considerations, tester capabilities of a type of test to be conducted.

However, even when employing canary testing, multiple upgrades in a network can impact network functionality. For example, multiple NFs and/or multiple NF service types in an end-to-end signalling path can be impacted by the upgrades.

### Summary

It is an object of the disclosure to obviate or eliminate at least some of the above-described disadvantages associated with existing techniques.

Therefore, according to an aspect of the disclosure, there is provided a first method for handling messages in a network. The first method is performed by a first network function (NF) node in the network. The first method comprises initiating transmission of a first message towards a second NF node in the network in response to an event that signals first information is to be managed by a third NF node in the network. The first message comprises the first information and an indication of whether the third NF node is to be an NF node that supports testing in the network. The first message comprises the indication for the third NF node to take into account when managing the first information.

According to another aspect of the disclosure, there is provided a first NF node comprising processing circuitry configured to operate in accordance with the first method described in respect of the first NF node. In some embodiments, the first NF node may comprise at least one memory for storing instructions which, when executed by the processing circuitry, cause the first NF node to operate in accordance with the first method described in respect of the first NF node.

According to another aspect of the disclosure, there is provided a second method for handling messages in a network. The second method is performed by a second NF node in the network. The second method comprises receiving a first message from a first NF node in the network in response to an event that signals first information is to be managed by a third NF node in the network. The first message comprises the first information and an indication of whether the third NF node is to be an NF node that supports testing in the network. The first message comprises the indication for the third NF node to take into account when managing the first information.

According to another aspect of the disclosure, there is provided a second NF node comprising processing circuitry configured to operate in accordance with the second method described in respect of the second NF node. In some embodiments, the second NF node may comprise at least one memory for storing instructions which, when executed by the processing circuitry, cause the second NF node to operate in accordance with the second method described in respect of the second NF node.

According to another, not independently claimed aspect of the disclosure, there is provided a method performed by a system. This method comprises the method described in respect of the first NF node and the method described in respect of the second NF node. According to another, not independently claimed aspect of the disclosure, there is provided a system comprising at least one first NF node as described earlier and at least one second NF node as described earlier.

According to another, not independently claimed aspect of the disclosure, there is provided a computer program comprising instructions which, when executed by processing circuitry, cause the processing circuitry to perform the first method described in respect of the first NF node and/or the second method described in respect of the second NF node.

Therefore, there is provided an improved technique for handling messages in a network.

### Brief description of the drawings

For a better understanding of the techniques, and to show how they may be put into effect, reference will now be made, by way of example, to the accompanying drawings, in which:
Figure 1A-D is a block diagram illustrating different existing systems;
Figure 2 is a block diagram illustrating a first network function node according to an embodiment;
Figure 3 is a block diagram illustrating a method performed by the first network function node according to an embodiment;
Figure 4 is a block diagram illustrating a second network function node according to an embodiment;
Figure 5 is a block diagram illustrating a method performed by the second network function node according to an embodiment;
Figure 6 is a signalling diagram illustrating an exchange of signals in an example system; and
Figures 7-10 are signalling diagrams illustrating an exchange of signals in a system according to some embodiments.

### Detailed Description

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

Herein, techniques for handling messages in a network are described. The techniques described herein can be used in respect of any network, such as any communications or telecommunications network, e.g. cellular network. The network may be a fifth generation (5G) network or any other generation network. In some embodiments, the network may be a core network or a radio access network (RAN). The techniques are implemented by a first network function (NF) node and a second NF node.

An NF is a third generation partnership project (3GPP) adopted, or 3GPP defined, processing function in a network, which has defined functional behaviour and 3GPP defined interfaces. An NF can be implemented either as a network element on a dedicated hardware, as a software instance running on a dedicated hardware, or as a virtualised function instantiated on an appropriate platform, e.g. on a cloud infrastructure. Herein, the term "node" in relation to an "NF node" will be understood to cover each of these scenarios. Herein, references to a plurality of NF nodes may refer to, for example, functionally equivalent instances of NF nodes.

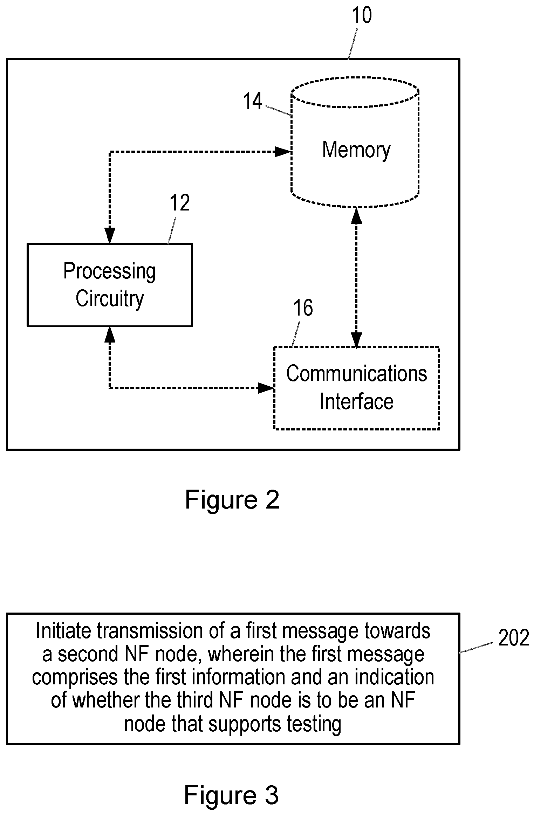

**Figure 2** illustrates a first NF node 10 in accordance with an embodiment. The first NF node 10 is for handling messages in a network. The first NF node 10 can also be referred to herein as a "client" or an "origin NF node". In some embodiments, the first NF node 10 referred to herein can refer to equipment capable, configured, arranged and/or operable to communicate directly or indirectly with the second NF node referred to herein, the third NF node referred to herein, and/or with other nodes or equipment to enable and/or to perform the functionality described herein. In some embodiments, the first NF node 10 referred to herein can, for example, be a physical node (e.g. a physical machine or server) or a virtual node (e.g. a virtual machine, VM).

In some embodiments, the first NF node 10 referred to herein can be a wireless device, e.g. a user equipment (UE). In some embodiments, the first NF node 10 referred to herein may be an access and mobility management function (AMF) node or a network exposure function (NEF) node. In some embodiments, such as those where the first message referred to herein is a service request, the first NF node 10 can be a first NF node of a service consumer. In some embodiments, the service consumer referred to herein can be a network operator, such as a mobile network operator (MNO).

As illustrated in Figure 2, the first NF node 10 comprises processing circuitry (or logic) 12. The processing circuitry 12 controls the operation of the first NF node 10 and can implement the method described herein in respect of the first NF node 10. The processing circuitry 12 can be configured or programmed to control the first NF node 10 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the first NF node 10. In some embodiments, the processing circuitry 12 can be configured to run software to perform the method described herein in respect of the first NF node 10. The software may be containerised according to some embodiments. Thus, in some embodiments, the processing circuitry 12 may be configured to run a container to perform the method described herein in respect of the first NF node 10.

Briefly, the processing circuitry 12 of the first NF node 10 is configured to initiate transmission of a first message towards a second NF node in the network in response to an event that signals first information is to be managed by a third NF node in the network. The first message comprises the first information and an indication of whether the third NF node is to be an NF node that supports testing in the network. The first message comprises the indication for the third NF node to take into account when managing the first information. Herein, the term "initiate" can mean, for example, cause or establish. Thus, the processing circuitry 12 of the first NF node 10 can be configured to itself transmit the first message (e.g. via the communications interface 16 of the first NF node 10) or can be configured to cause another node to transmit the first message.

As illustrated in Figure 2, in some embodiments, the first NF node 10 may optionally comprise a memory 14. The memory 14 of the first NF node 10 can comprise a volatile memory or a non-volatile memory. In some embodiments, the memory 14 of the first NF node 10 may comprise a non-transitory media. Examples of the memory 14 of the first NF node 10 include, but are not limited to, a random access memory (RAM), a read only memory (ROM), a mass storage media such as a hard disk, a removable storage media such as a compact disk (CD) or a digital versatile disk (DVD), and/or any other memory.

The processing circuitry 12 of the first NF node 10 can be communicatively coupled (e.g. connected) to the memory 14 of the first NF node 10. In some embodiments, the memory 14 of the first NF node 10 may be for storing program code or instructions which, when executed by the processing circuitry 12 of the first NF node 10, cause the first NF node 10 to operate in the manner described herein in respect of the first NF node 10. For example, in some embodiments, the memory 14 of the first NF node 10 may be configured to store program code or instructions that can be executed by the processing circuitry 12 of the first NF node 10 to cause the first NF node 10 to operate in accordance with the method described herein in respect of the first NF node 10. Alternatively or in addition, the memory 14 of the first NF node 10 can be configured to store any information, data, messages, requests, responses, indications, notifications, signals, or similar, that are described herein. The processing circuitry 12 of the first NF node 10 may be configured to control the memory 14 of the first NF node 10 to store any of the information, data, messages, requests, responses, indications, notifications, signals, or similar, that are described herein.

In some embodiments, as illustrated in Figure 2, the first NF node 10 may optionally comprise a communications interface 16. The communications interface 16 of the first NF node 10 can be communicatively coupled (e.g. connected) to the processing circuitry 12 of the first NF node 10 and/or the memory 14 of the first NF node 10. The communications interface 16 of the first NF node 10 may be operable to allow the processing circuitry 12 of the first NF node 10 to communicate with the memory 14 of the first NF node 10 and/or vice versa. Similarly, the communications interface 16 of the first NF node 10 may be operable to allow the processing circuitry 12 of the first NF node 10 to communicate with any one or more nodes (e.g. the second NF node, the third NF node, and/or the SCP node) referred to herein and/or any other node. The communications interface 16 of the first NF node 10 can be configured to transmit and/or receive any of the information, data, messages, requests, responses, indications, notifications, signals, or similar, that are described herein. In some embodiments, the processing circuitry 12 of the first NF node 10 may be configured to control the communications interface 16 of the first NF node 10 to transmit and/or receive any of the information, data, messages, requests, responses, indications, notifications, signals, or similar, that are described herein.

Although the first NF node 10 is illustrated in Figure 2 as comprising a single memory 14, it will be appreciated that the first NF node 10 may comprise at least one memory (i.e. a single memory or a plurality of memories) 14 that operate in the manner described herein. Similarly, although the first NF node 10 is illustrated in Figure 2 as comprising a single communications interface 16, it will be appreciated that the first NF node 10 may comprise at least one communications interface (i.e. a single communications interface or a plurality of communications interfaces) 16 that operate in the manner described herein. It will also be appreciated that Figure 2 only shows the components required to illustrate an embodiment of the first NF node 10 and, in practical implementations, the first NF node 10 may comprise additional or alternative components to those shown.

**Figure 3** illustrates a first method performed by the first NF node 10 in accordance with an embodiment. The first method is for handling messages in a network. The first NF node 10 described earlier with reference to Figure 2 can be configured to operate in accordance with the first method of Figure 3. The first method can be performed by or under the control of the processing circuitry 12 of the first NF node 10 according to some embodiments.

With reference to Figure 3, as illustrated at block 202, transmission of a first message is initiated towards a second NF node in the network in response to an event that signals (to the first NF node 10) first information is to be managed by a third NF node in the network. The first message comprises the first information and an indication of whether the third NF node is to be (e.g. needs to be) an NF node that supports testing in the network. The first message comprises the indication for the third NF node to take into account when managing the first information.

Herein, an NF node that supports testing in the network can be an NF node that is enabled (e.g. configured) to carry out testing. Such an NF node can be said to be "testing enabled". In some embodiments, an NF node that supports testing in the network can be an NF node that supports testing with a predefined (e.g. controlled) amount of network traffic. That is, an NF node that supports testing in the network can be an NF node that supports canary testing in the network. Thus, any reference to "testing" referred to herein can comprise "canary testing". Also, herein, an NF node that supports testing in the network can be an NF node that is already undergoing testing (i.e. that is under testing) in the network or an NF node that is capable of undergoing testing (i.e. that is capable of being under testing) in the network.

In some embodiments, it can be the case that the third NF node is to be an NF node that supports testing in the network if the first information comprises information that is to be managed under testing conditions, the first information corresponds to an entity that is under testing in the network, and/or the first information corresponds to one or more functionalities that are under testing in the network.

In some embodiments, the first information may correspond to one or more functionalities that are under testing in the network. In some of these embodiments, the first message may comprise an indication of the one or more functionalities that are under testing in the network.

Although not illustrated in Figure 3, in some embodiments, the first method may comprise checking whether the third NF node is to be an NF node that supports testing in the network. The first NF node 10 (e.g. the processing circuitry 12 of the first NF node 10) can be configured to perform this checking according to some embodiments. In some of these embodiments, checking whether the third NF node is to be an NF node that supports testing in the network may comprise checking whether second information stored in a memory is indicative that the third NF node is to be an NF node that supports testing in the network. In some embodiments, the memory can be a memory 14 of the first NF node 10 or a memory external to the first NF node 10. In some embodiments, a unified data management (UDM) node may comprise the memory external to the first NF node 10. Alternatively or in addition, in some embodiments, the memory external to the first NF node 10 may be a unified data repository (UDR). In some embodiments, the second information stored in the memory can be a profile of an entity to which the first information corresponds and the profile may comprise an attribute indicative of whether the third NF node is to be an NF node that supports testing in the network.

Although also not illustrated in Figure 3, in some embodiments, the first method may comprise acquiring an identifier for the entity to which the first information corresponds and identifying the profile of the entity using the identifier. In these embodiments, the profile of the entity can comprise the identifier. The first NF node 10 (e.g. the processing circuitry 12 of the first NF node 10) can be configured to acquire this identifier (e.g. via the communications interface 16 of the first NF node 10) and/or identify the profile according to some embodiments. In some embodiments, the identifier can be a subscription concealed identifier (SUCI), the identifier can be a subscription permanent identifier (SUPI), or the identifier can be a generic public subscription identifier (GPSI).

Although also not illustrated in Figure 3, in some embodiments, the first method may comprise selecting the third NF node to manage the first information. The first NF node 10 (e.g. the processing circuitry 12 of the first NF node 10) can be configured to perform this selection according to some embodiments.

In some embodiments, where an NF node that supports testing in the network is available, selecting the third NF node to manage the first information may comprise selecting the third NF node to be an NF node that supports testing in the network. In some of these embodiments, the first message may comprise an indication that the third NF node supports testing in the network. In some embodiments, selecting the third NF node to be an NF node that supports testing in the network may comprise selecting the third NF node to be an NF node having a profile comprising one or more attributes indicative that the NF node supports testing in the network. In some of these embodiments, the profile may comprise a plurality of attributes and each attribute of the plurality of attributes can be indicative that the NF node supports testing in the network in respect of a different functionality. In some embodiments, the first message may comprise an indication of one or more functionalities that are under testing in the network and the third NF node selected can be an NF node that supports testing in the network for the one or more functionalities.

In some embodiments, where an NF node that supports testing in the network is not available, selecting the third NF node to manage the first information may comprise selecting the third NF node to be an NF node that does not support testing in the network. In some of these embodiments, the first message may comprise an indication that the third NF node does not support testing in the network.

In some embodiments, the first message may comprise a request for an indication of whether the third NF node supports testing in the network. Although not illustrated in Figure 3, in some of these embodiments, the first method may comprise receiving, from the second NF node, a second message comprising an indication of whether the third NF node supports testing in the network. The first NF node 10 (e.g. the processing circuitry 12 of the first NF node 10) can be configured to receive this second message (e.g. via the communications interface 16 of the first NF node 10) according to some embodiments.

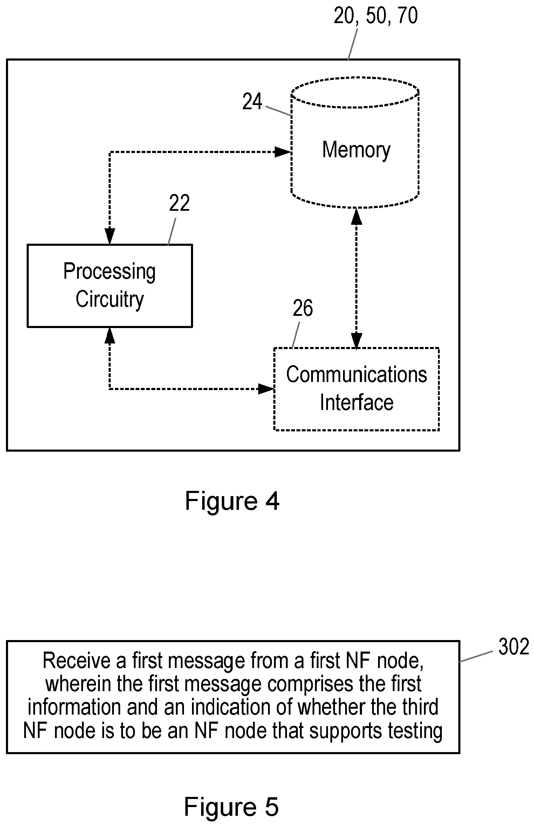

**Figure 4** illustrates a second NF node 20, 50, 70 in accordance with an embodiment. The second NF node 20, 50, 70 is for handling messages in a network. The second NF node 20, 50, 70 can also be referred to as a "server" or a "peer NF node". In some embodiments, the second NF node 20, 50, 70 referred to herein can refer to equipment capable, configured, arranged and/or operable to communicate directly or indirectly with the first NF node 10 referred to herein, the third NF node referred to herein, and/or with other nodes or equipment to enable and/or to perform the functionality described herein. In some embodiments, the second NF node 20, 50, 70 referred to herein can, for example, be a physical node (e.g. a physical machine or server) or a virtual node (e.g. a virtual machine, VM).

In some embodiments, such as those where the first message referred to herein is a service request, the second NF node 20, 50 can be a second NF node of a service producer. In some embodiments, the second NF node 20, 50 referred to herein can be a session management function (SMF) node 20 or a policy control function (PCF) node 50. In other embodiments, the second NF node 70 referred to herein can be a service communication proxy (SCP) node that is configured to operate as an SCP between the first NF node 10 referred to herein and the third NF node referred to herein. In some embodiments, the third NF node referred to herein can be the same NF node as the second NF node 20, 50. Thus, in some embodiments, the third NF node can be as described herein in respect of the second NF node 20, 50.

As illustrated in Figure 4, the second NF node 20, 50, 70 comprises processing circuitry (or logic) 22. The processing circuitry 22 controls the operation of the second NF node 20, 50, 70 and can implement the method described herein in respect of the second NF node 20, 50, 70. The processing circuitry 22 can be configured or programmed to control the second NF node 20, 50, 70 in the manner described herein. The processing circuitry 22 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the second NF node 20, 50, 70. In some embodiments, the processing circuitry 22 can be configured to run software to perform the method described herein in respect of the second NF node 20, 50, 70. The software may be containerised according to some embodiments. Thus, in some embodiments, the processing circuitry 22 may be configured to run a container to perform the method described herein in respect of the second NF node 20, 50, 70.

Briefly, the processing circuitry 22 of the second NF node 20, 50, 70 is configured to receive a first message from the first NF node 10 in the network in response to an event that signals first information is to be managed by a third NF node in the network. The first message comprises the first information and an indication of whether the third NF node is to be an NF node that supports testing in the network. The first message comprises the indication for the third NF node to take into account when managing the first information.

As illustrated in Figure 4, in some embodiments, the second NF node 20, 50, 70 may optionally comprise a memory 24. The memory 24 of the second NF node 20, 50, 70 can comprise a volatile memory or a non-volatile memory. In some embodiments, the memory 24 of the second NF node 20, 50, 70 may comprise a non-transitory media. Examples of the memory 24 of the second NF node 20, 50, 70 include, but are not limited to, a random access memory (RAM), a read only memory (ROM), a mass storage media such as a hard disk, a removable storage media such as a compact disk (CD) or a digital versatile disk (DVD), and/or any other memory.

The processing circuitry 22 of the second NF node 20, 50, 70 can be communicatively coupled (e.g. connected) to the memory 24 of the second NF node 20, 50, 70. In some embodiments, the memory 24 of the second NF node 20, 50, 70 may be for storing program code or instructions which, when executed by the processing circuitry 22 of the second NF node 20, 50, 70, cause the second NF node 20, 50, 70 to operate in the manner described herein in respect of the second NF node 20, 50, 70. For example, in some embodiments, the memory 24 of the second NF node 20, 50, 70 may be configured to store program code or instructions that can be executed by the processing circuitry 22 of the second NF node 20, 50, 70 to cause the second NF node 20, 50, 70 to operate in accordance with the method described herein in respect of the second NF node 20, 50, 70. Alternatively or in addition, the memory 24 of the second NF node 20, 50, 70 can be configured to store any information, data, messages, requests, responses, indications, notifications, signals, or similar, that are described herein. The processing circuitry 22 of the second NF node 20, 50, 70 may be configured to control the memory 24 of the second NF node 20, 50, 70 to store any of the information, data, messages, requests, responses, indications, notifications, signals, or similar, that are described herein.

In some embodiments, as illustrated in Figure 4, the second NF node 20, 50, 70 may optionally comprise a communications interface 26. The communications interface 26 of the second NF node 20, 50, 70 can be communicatively coupled (e.g. connected) to the processing circuitry 22 of the second NF node 20, 50, 70 and/or the memory 24 of the second NF node 20, 50, 70. The communications interface 26 of the second NF node 20, 50, 70 may be operable to allow the processing circuitry 22 of the second NF node 20, 50, 70 to communicate with the memory 24 of the second NF node 20, 50, 70 and/or vice versa. Similarly, the communications interface 26 of the second NF node 20, 50, 70 may be operable to allow the processing circuitry 22 of the second NF node 20, 50, 70 to communicate with any one or more nodes (e.g. the first NF node 10, the third NF node, and/or the SCP node) referred to herein and/or any other node. The communications interface 26 of the second NF node 20, 50, 70 can be configured to transmit and/or receive any of the information, data, messages, requests, responses, indications, notifications, signals, or similar, that are described herein. In some embodiments, the processing circuitry 22 of the second NF node 20, 50, 70 may be configured to control the communications interface 26 of the second NF node 20, 50, 70 to transmit and/or receive any of the information, data, messages, requests, responses, indications, notifications, signals, or similar, that are described herein.

Although the second NF node 20, 50, 70 is illustrated in Figure 4 as comprising a single memory 24, it will be appreciated that the second NF node 20, 50, 70 may comprise at least one memory (i.e. a single memory or a plurality of memories) 24 that operate in the manner described herein. Similarly, although the second NF node 20, 50, 70 is illustrated in Figure 4 as comprising a single communications interface 26, it will be appreciated that the second NF node 20, 50, 70 may comprise at least one communications interface (i.e. a single communications interface or a plurality of communications interfaces) 26 that operate in the manner described herein. It will also be appreciated that Figure 4 only shows the components required to illustrate an embodiment of the second NF node 20, 50, 70 and, in practical implementations, the second NF node 20, 50, 70 may comprise additional or alternative components to those shown.

**Figure 5** illustrates a second method performed by the second NF node 20, 50, 70 in accordance with an embodiment. The second method is for handling messages in a network. The second NF node 20, 50, 70 described earlier with reference to Figure 4 can be configured to operate in accordance with the second method of Figure 5. The second method can be performed by or under the control of the processing circuitry 22 of the second NF node 20, 50, 70 according to some embodiments.

With reference to Figure 5, as illustrated at block 302, a first message is received from the first NF node 10 in the network in response to an event that signals first information is to be managed by a third NF node in the network. The first message comprises the first information and an indication of whether the third NF node is to be (e.g. needs to be) an NF node that supports testing in the network. The first message comprises the indication for the third NF node to take into account when managing the first information.

In some embodiments, it can be the case that the third NF node is to be an NF node that supports testing in the network if the first information comprises information that is to be managed under testing conditions, the first information corresponds to an entity that is under testing in the network, and/or the first information corresponds to one or more functionalities that are under testing in the network.

In some embodiments, the first information may correspond to one or more functionalities that are under testing in the network. In some of these embodiments, the first message may comprise an indication of the one or more functionalities that are under testing in the network.

In some embodiments, such as those where the first NF node selects the third NF node, the first message may comprise an indication of whether the third NF node supports testing in the network.

Although not illustrated in Figure 5, in some embodiments, the second method may comprise selecting the third NF node to manage the first information. The second NF node 20, 50, 70 (e.g. the processing circuitry 22 of the second NF node 20, 50, 70) can be configured to perform this selection according to some embodiments. In some embodiments, where an NF node that supports testing in the network is available, selecting the third NF node to manage the first information can comprise selecting the third NF node to be an NF node that supports testing in the network. In some embodiments, selecting the third NF node to be an NF node that supports testing in the network may comprise selecting the third NF node to be an NF node having a profile comprising one or more attributes indicative that the NF node supports testing in the network. In some of these embodiments, the profile may comprise a plurality of attributes and each attribute of the plurality of attributes can be indicative that the NF node supports testing in the network in respect of a different functionality. In some embodiments, the first message may comprise an indication of one or more functionalities that are under testing in the network and the third NF node selected can be an NF node that supports testing in the network for the one or more functionalities.

In some embodiments, where an NF node that supports testing in the network is not available, selecting the third NF node to manage the first information may comprise selecting the third NF node to be an NF node that does not support testing in the network.

In some embodiments, such as those where the second NF node selects the third NF node, the first message may comprise a request for an indication of whether the third NF node supports testing in the network.

Although not illustrated in Figure 5, in some embodiments, the second method may comprise initiating transmission of a second message towards the first NF node. The second message may comprise an indication of whether the third NF node supports testing in the network. In some embodiments, the second NF node 20, 50, 70 (e.g. the processing circuitry 22 of the second NF node 20, 50, 70) can be configured to initiate transmission of (e.g. itself transmit or cause another node to transmit) the second message towards the first NF node, such as via the communications interface 26 of the second NF node 20, 50, 70.

Although also not illustrated in Figure 5, in some embodiments, the second method may comprise initiating transmission of the first message towards the third NF node. In some embodiments, the second NF node 20, 50, 70 (e.g. the processing circuitry 22 of the second NF node 20, 50, 70) can be configured to initiate transmission of (e.g. itself transmit or cause another node to transmit) the first message towards the third NF node, such as via the communications interface 26 of the second NF node 20, 50, 70.

Although also not illustrated in Figure 5, in some embodiments, the second method may comprise receiving a second message from the third NF node. The second message may comprise an indication of whether the third NF node supports testing in the network. The second NF node 20, 50, 70 (e.g. the processing circuitry 22 of the second NF node 20, 50, 70) can be configured to receive the second message (e.g. via the communications interface 26 of the second NF node 20, 50, 70) according to some embodiments.

In some embodiments, the first message referred to herein may comprise one or more parameters on the basis of which the third NF node is to be selected. In some embodiments, the first message referred to herein may comprise an indication of an application programming interface (API) root of a uniform resource identifier (URI) to be used to reach the third NF node. Alternatively or in addition, in some embodiments, the first message referred to herein may comprise an indication of a set of NF nodes from which the third NF node is to be selected. In some embodiments, the NF nodes of a set of NF nodes can have one or more characteristics in common. For example, the NF nodes of a set of NF nodes can be of the same type (e.g. they can all be session management function (SMF) nodes, policy control function (PCF) nodes, or another type of NF node), can support the same service(s), and/or can support the same network slice(s). The NF nodes of a set of NF nodes may be deployed in different locations (e.g. different data centers) and/or have access to (or share) the same context data. The NF nodes of a set of NF nodes can thus be interchangeable.

As mentioned earlier, the first message referred to herein comprises the indication for the third NF node to take into account when it manages the first information (e.g. when it executes a service in embodiments where the first information is a request for a service to be provided).

For example, if the indication is that the third NF node is to be an NF node that supports testing in the network and the third NF node supports testing in the network, the third NF node may manage the first information (e.g. execute the service) under testing conditions. In this case, the third NF node may optionally also initiate transmission of the first message towards at least one other (fourth) NF node in the network and, in the same way as the third NF node, the at least one other (fourth) NF node can take into account the indication when it manages the first information.

On the other hand, if the indication is that the third NF node is to be an NF node that supports testing in the network and the third NF node does not support testing in the network, the third NF node may initiate transmission of a response towards the first NF node to indicate this and/or initiate transmission of the first message towards at least one other (fourth) NF node in the network. In the same way as the third NF node, the at least one other (fourth) NF node can take into account the indication when it manages the first information.

In some embodiments, the first information referred to herein can be a request for (e.g. the third NF node to provide) a service, such as a service requested by the first NF node 10. For example, the request can be a service-based interface (SBI) request. Generally, a service is software intended to be managed for users. Herein, a service can be any type of service, such as a communication service (e.g. a notification service or a callback service), a context management (e.g. user equipment context management (UECM)) service, a data management (DM) service, or any other type of service. In a more specific embodiment, the service referred to herein can be a service that provides a notification to the first NF node 10 of a change to an international mobile equipment identity (IMEI) or a permanent equipment identifier (PMI) for any of the wireless devices. In another more specific embodiment, the service can be a service that provides a notification to the first NF node 10 of any of the wireless devices moving from one public land mobile network (PLMN) to another PLMN. However, these are only some example use cases and the techniques described herein are also applicable to many other use cases. Herein, references to providing a service can refer to, for example, executing or running the service.

In some embodiments, the event referred to herein can be an event internal to the first NF node 10. In other embodiments, the event referred to herein can be an event external to the first NF node 10. In some embodiments, the event referred to herein can be any trigger of an "under testing" procedure, such as any procedure that involves testing in the network. In some embodiments, the (e.g. internal) event referred to herein can be a monitoring event that is configured in the first NF node 10. For example, the monitoring event can be the first NF node 10 identifying that a wireless device (e.g. UE) moved from the network, a certain timer reaching a threshold, or any other monitoring event. In some embodiments, the (e.g. external) event referred to herein can be the first NF node 10 receiving the first information. In some embodiments, the first information referred to herein may be received from an entity to which the first information corresponds.

The entity referred to herein (e.g. to which the first information corresponds and/or from which the first information is received) may be an application function (AF) node, a wireless device, or any other entity. For example, the entity referred to herein may be an AF node in embodiments where the first NF node 10 referred to herein is an NEF node. In this case, the identifier of the AF node can, for example, be a GPSI. Similarly, the entity referred to herein may be a wireless device in embodiments where the first NF node 10 referred to herein is an AMF node.

The wireless device referred to herein can comprise any type, and any combination of types, of wireless device. Examples of a type of wireless device as referred to herein include, but are not limited to, a user equipment (UE), such as a smart phone, a mobile phone, a cell phone, a voice over IP (VoIP) phone, a wireless local loop phone, a desktop computer, a personal digital assistant (PDA), a wireless camera, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. The wireless device as referred to herein may support device-to-device (D2D) communication, for example, by implementing a third generation partnership project (3GPP) standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, the wireless device as referred to herein may represent a machine or other device that performs monitoring and/or measurements, and transmits the results of such monitoring and/or measurements to another wireless device and/or a network node. The wireless device as referred to herein may in this case be a machine-to-machine (M2M) device, which may in a 3GPP context be referred to as a machine type communication (MTC) device.

As one particular example, the wireless device as referred to herein may be a user equipment (UE), e.g. implementing the 3GPP narrow band internet of things (NB-IoT) standard. Particular examples of such machines or devices are sensors, metering devices such as power meters, industrial machinery, or home or personal appliances (e.g. refrigerators, televisions, etc), personal wearables (e.g. watches, fitness trackers, etc). In other scenarios, the wireless device as referred to herein may represent a vehicle or other equipment that is capable of monitoring and/or reporting on its operational status or other functions associated with its operation. The wireless device as referred to herein may represent the endpoint of a wireless connection, in which case the wireless device as referred to herein may be referred to as a wireless terminal. Furthermore, the wireless device as referred to herein may be mobile, in which case it may also be referred to as a mobile device or a mobile terminal.

The wireless device referred to herein can be a wireless device in a fifth generation core (5GC) network. In some embodiments, the wireless devices referred to herein can be in a single PLMN or a plurality of PLMNs.

As mentioned earlier, in some embodiments, the first NF node 10 referred to herein may be an access and mobility management function (AMF) node or a network exposure function (NEF) node. Alternatively or in addition, in some embodiments, the third NF node referred to herein may be a session management function (SMF) node or a policy control function (PCF) node.

In some embodiments, the third NF node referred to herein can be the same NF node as the second NF node referred to herein. In other embodiments, the third NF node referred to herein can be a different NF node from the second NF node referred to herein. In some embodiments, where the third NF node is a different NF node from the second NF node, the second NF node referred to herein can be a service communication proxy (SCP) node that is configured to operate as an SCP between the first NF node 10 referred to herein and the third NF node referred to herein.

In some embodiments, the SCP node referred to herein and the first NF node 10 referred to herein may be deployed in independent deployment units, and/or the SCP node referred to herein and one or both of the second NF node referred to herein and third NF node referred to herein may be deployed in independent deployment units. Thus, an SCP node based on independent deployment units is possible, as described in 3GPP TS 23.501 V17.3.0. In other embodiments, the SCP node referred to herein may be deployed as a distributed network element. For example, in some embodiments, part (e.g. a service agent) of the SCP node referred to herein may be deployed in the same deployment unit as the first NF node 10 referred to herein, and/or part (e.g. a service agent) of the SCP node referred to herein may be deployed in the same deployment unit as one or both of the second NF node referred to herein and third NF node referred to herein. Thus, an SCP node based on a service mesh is possible, as described in 3GPP TS 23.501 V17.3.0.

In some embodiments, the SCP node referred to herein can be a first SCP node and at least one second SCP node may be configured to operate as an SCP between the first NF node 10 referred to herein and the first SCP node referred to herein, and/or at least one third SCP node may be configured to operate as an SCP between the first SCP node referred to herein and one or both of the second NF node referred to herein and the third NF node referred to herein. Thus, a multipath of SCP nodes is possible. In some embodiments, the first SCP node referred to herein and the at least one second SCP node and/or the at least one third SCP node may be deployed in independent deployment units. In some embodiments, the at least one second SCP node and/or the at least one third SCP node may be deployed as distributed network elements. In some embodiments, an entity may comprise the first SCP node referred to herein and a network repository function (NRF) node.

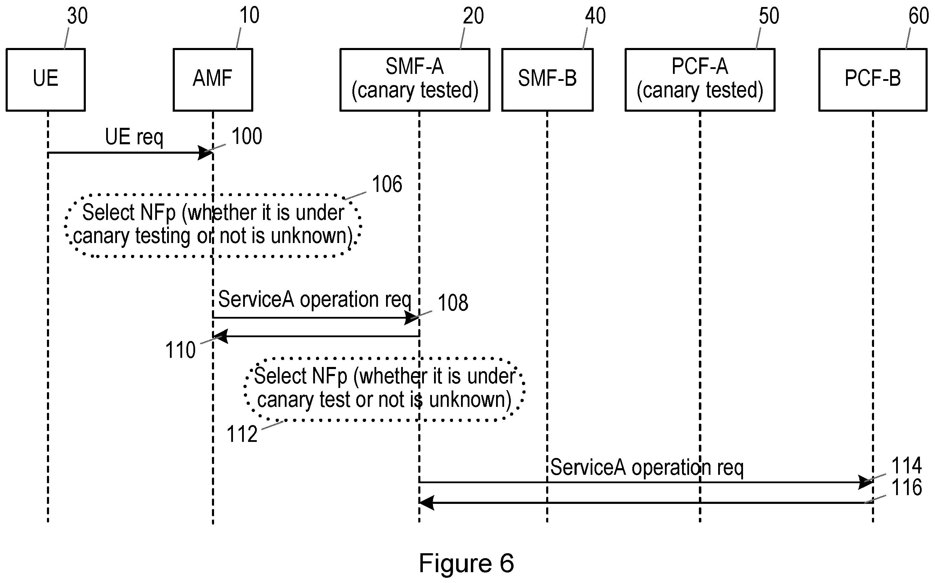

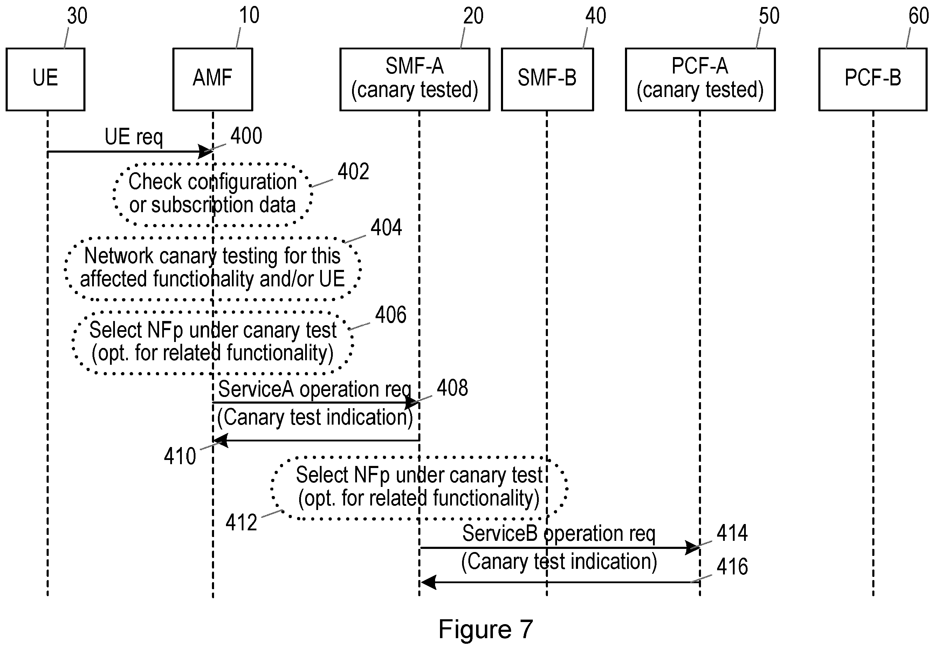

There is also provided a system comprising at least one first NF node 10 as described herein and at least one second NF node 20, 50, 70 as described herein. A method performed by the system comprises the method described herein in respect of the first NF node 10 and the method described herein in respect of the second NF node 20, 50, 70. Some example systems will now be described with reference to the signalling diagrams of Figures 6-10. As will become apparent from the description with reference to Figure 6, there exists an issue with existing techniques and, as will become apparent from the description with reference to Figures 7-10, this issue can be addressed using the techniques described herein.

**Figure 6** is a signalling diagram illustrating an exchange of signals in an example system. The system illustrated in Figure 6 comprises a plurality of NF nodes 10, 20, 60. The plurality of NF nodes comprise an AMF node ("AMF") 10, an SMF node ("SMF-A") 20, and a PCF node ("PCF-B") 60. In the example illustrated in Figure 6, the AMF node 10 can be referred to as a "client" or an "origin NF node", whereas the SMF node 20 and the PCF node 60 can each be referred to as a "server" or a "peer NF node". As illustrated in Figure 6, in some embodiments, the system can comprise one or more other NF nodes 40, 50, such as at least one other SMF node ("SMF-B") 40 and/or at least one other PCF node ("PCF-A") 50. In some embodiments, the system may comprise multiple instances of the same SMF node ("SMF-A", "SMF-B") 20, 40 and/or multiple instances of the same PCF node ("PCF-A", "PCF-B") 50, 60. As illustrated in Figure 6, in some embodiments, the system can comprise an entity 30. For the purpose of the example, the entity is a user equipment ("UE") 30.

Although examples of the types of nodes/entities and the number of nodes/entities have been provided with reference to Figure 6, it will be understood that the system may comprise any other types (or combination of types) of nodes/entities and any other number of nodes/entities. For example, the UE 30 may be replaced with an AF node and the AMF 10 may be replaced with an NEF.

As illustrated by arrow 100 of Figure 6, there is an event that signals to the AMF node 10 that first information is to be managed by an NF node in the network. In the example illustrated in Figure 6, this event is the AMF node 10 receiving the first information and the first information is a request for an NF node to provide a service. The first information is received by the AMF node 10 from the UE 30 and the first information corresponds to this UE 30.

As illustrated by block 106 of Figure 6, the AMF node 10 selects the SMF node 20 to manage the first information. For example, the SMF node 20 can be selected from a plurality of NF nodes 20, 40, 50, 60. In the example illustrated in Figure 6, the first information is a request for a service to be provided and thus the SMF node 20 is selected to execute the request. In the example illustrated in Figure 6, the SMF node 20 selected happens to support testing in the network. However, the AMF node 10 is unaware of whether or not the NF node that it selects supports testing (e.g. canary testing) in the network.

As illustrated by arrow 108 of Figure 6, the AMF node 10 transmits a first message towards the selected SMF node 20 and thus the SMF node 20 receives the first message. The first message comprises the first information. In the example illustrated in Figure 6, the first information is the request for a service ("Service A") to be provided and thus the first message comprises this request. As illustrated by arrow 110 of Figure 6, the SMF node 20 transmits a first response to the first message towards the AMF node 10 and thus the AMF node 10 receives the first response.

As illustrated by block 112 of Figure 6, the SMF node 20 selects the PCF node 60 to manage the first information. For example, the PCF node 60 can be selected from a plurality of NF nodes 40, 50, 60. In the example illustrated in Figure 6, the first information is a request for a service to be provided and thus the PCF node 60 is selected to execute the request. In the example illustrated in Figure 6, the PCF node 60 selected happens to not support testing in the network. However, the SMF node 20 is unaware of whether or not the NF node that it selects supports testing (e.g. canary testing) in the network.

As illustrated by arrow 114 of Figure 6, the SMF node 20 transmits the first message towards the selected PCF node 60 and thus the PCF node 60 receives the first message. The first message comprises the first information. In the example illustrated in Figure 6, the first information is the request for a service ("Service A") to be provided and thus the first message comprises this request. As illustrated by arrow 116 of Figure 6, the PCF node 60 transmits a second response to the first message towards the SMF node 20 and thus the SMF node 20 receives the second response.

As mentioned above, for the selection of an NF node to manage the first information (e.g. execute a service request), it is not known whether or not the selected NF node 20, 60 supports testing (e.g. canary testing). It is also not possible to identify whether or not the first information (e.g. certain requests and/or other network traffic) that is to be managed is itself under testing (e.g. canary testing) or whether or not the UE 30 from which the first information is received supports testing (e.g. canary testing). There is thus no control over which first information reaches each NF node 20, 40, 50, 60. The first information is transmitted to one or more NF nodes 20, 40, 50, 60 regardless of whether those one or more NF nodes 20, 40, 50, 60 support testing (e.g. canary testing) in the network. As such, there is no control on the amount of network traffic that reaches an NF node that supports testing (e.g. canary testing) in the network. This can result in NF nodes becoming overloaded and/or failing.

These problems can be resolved by way of the technique described herein, such as in the manner illustrated in Figures 7-10.

**Figure 7** is a signalling diagram illustrating an exchange of signals in a system according to an embodiment. The system illustrated in Figure 7 comprises a plurality of NF nodes 10, 20, 50. The plurality of NF nodes comprise an AMF node ("AMF") 10, an SMF node ("SMF-A") 20, and a PCF node ("PCF-A") 50. The AMF node 10 can be as described earlier with reference to Figures 2 and 3. The SMF node 20 can be as described earlier with reference to Figures 4 and 5. In the example illustrated in Figure 7, the AMF node 10 can also be referred to as a "client" or an "origin NF node", whereas the SMF node 20 and the PCF node 50 can each be referred to as a "server" or a "peer NF node".

As illustrated in Figure 7, in some embodiments, the system can comprise one or more other NF nodes 40, 60, such as at least one other SMF node ("SMF-B") 40 and/or at least one other PCF node ("PCF-B") 60. In some embodiments, the system may comprise multiple instances of the same SMF node 20, 40 and/or multiple instances of the same PCF node 50, 60. As illustrated in Figure 7, in some embodiments, the system can comprise an entity 30. For the purpose of the illustrated embodiment, the entity is a user equipment ("UE") 30.

Although examples of the types of nodes/entities and the number of nodes/entities have been provided with reference to Figure 7, it will be understood that the system may comprise any other types (or combination of types) of nodes/entities and any other number of nodes/entities. For example, the UE 30 may be replaced with an AF node and the AMF 10 may be replaced with an NEF.

Figure 7 is intended to illustrate an interaction from the AMF node 10 to other NF nodes in a simplified signalling path, where it is identified that testing is be considered. In the embodiment illustrated in Figure 7, the AMF node 10 is considered to be the "origin NF node". However, in other embodiments, other NF nodes may be the "origin NF" (e.g. depending on the functionality to be tested) and other interactions can apply.

As illustrated by arrow 400 of Figure 7, there is an event that signals to the AMF node 10 that first information is to be managed by an NF node in the network. In the embodiment illustrated in Figure 7, this event is the AMF node 10 receiving the first information and the first information is a request for an NF node to provide a service. The first information is received by the AMF node 10 from the UE 30 and the first information corresponds to this UE 30.

As illustrated by block 402 of Figure 7, the AMF node 10 may check whether the NF node that is to manage the first information is to be (e.g. needs to be) an NF node that supports testing in the network. For example, the AMF node 10 can identify whether the first information (e.g. the received interaction or request, such as from the UE 30) is required to be managed by a part of the network that supports testing.

In some embodiments, the AMF node 10 may check whether second information stored in a memory is indicative that the NF node that is to manage the first information is to be an NF node that supports testing in the network. The memory can be a memory 14 of the AMF node 10 or a memory external to the AMF node 10. In some embodiments, a unified data management (UDM) node may comprise the memory external to the AMF node 10 and/or the memory external to the AMF node 10 may be a unified data repository (UDR). In some embodiments, the second information stored in the memory can be a profile (e.g. subscription profile) of the UE 30 to which the first information corresponds. This profile can, for example, comprise an attribute indicative of whether an NF node that supports testing in the network is required. In some embodiments, the AMF node 10 may acquire an identifier (e.g. SUCI, SUPI, GPSI, and/or other identifier) for the UE 30 to which the first information corresponds and identify the profile of the UE 30 using the identifier. The profile of the UE 30 may comprise the identifier. In a more detailed example, the AMF node 10 may identify the subscription to which the request corresponds (e.g. based on the identifier for the UE 30) and, in the corresponding subscription profile, it may be newly indicated (e.g. provisioned in the UDM node) that the subscription is under testing (e.g. by a new attribute).

In this way, the AMF node 10 can identify whether the first information is required to be managed by a part of the network that supports testing based on local configuration or the AMF node 10 (or other NF node that has access to the UDM node and/or UDR data like the AMF node 10) may check information in a profile. The profile may indicate one or more functionalities (or features) that are under testing. It may be, for example, that one functionality is defined to be under testing, such as by configuration or in the profile. In these cases, the AMF node 10 may identify whether the first information is related to this functionality. That is, based on the functionality executed by the AMF node 10 (e.g. as per reception of the first information), certain logic may be executed, that may be configured to be under testing. For example, the functionality can be a mobility from one type of network to another type of network (e.g. a fourth generation (4G) network to a fifth generation (5G) network), a specific authentication method, and/or any other functionality. In some embodiments, a plurality of functionalities may be defined to be under testing simultaneously, such as for a given subscription or set of subscriptions.

In the embodiment of Figure 7, as illustrated by block 404, the result of the check at block 402 of Figure 7 is that the NF node that is to manage the first information is to be (e.g. needs to be) an NF node that supports testing in the network, e.g. for one or more functionalities and/or for this particular UE 30 to which the first information corresponds. Thus, based on the step illustrated by block 402 of Figure 7, the AMF node 10 identifies whether the first information should use a part of the network that supports testing.

If an NF node that supports testing in the network is available, then the AMF node 10 can select such an NF node to manage the first information. Thus, as illustrated by block 406 of Figure 7, the AMF node 10 may select the SMF node 20 to manage the first information. The SMF node 20 selected by the AMF node 10 supports testing in the network, e.g. for one or more functionalities and/or the UE 30 to which the first information corresponds. The SMF node 20 may be selected from a plurality of NF nodes 20, 40, 50, 60. In the embodiment illustrated in Figure 7, the first information is a request for a service to be provided and thus the SMF node 20 is selected to execute the request.

In some embodiments, if the first information is affected by testing, the AMF node 10 may select an NF node among suitable ones (e.g. based on one or more selection criteria) that are defined to support testing. In order to identify the NF nodes that support testing, the AMF node may check a new attribute in the NF profile that is indicative of that. Thus, in some embodiments, the AMF node 10 may select an NF node having a profile comprising one or more attributes indicative that the NF node supports testing in the network. In some cases, the profile may comprise a plurality of attributes and each attribute of the plurality of attributes can be indicative that the NF node supports testing in the network in respect of a different functionality. For example, the NF profile may comprise a plurality of values that can correspond to different functionalities (or features/modifications) that may be under testing independently. This can allow different NF nodes to be defined for different functionalities under testing and this is known easily by the AMF node 10 based on the attribute(s) in the NF profile. The AMF node 10 may have access to NF profiles either by discovering them from a network repository function (NRF) node or using previously cached discovery results. For example, the AMF node 10 may acquire the NF profiles either by requesting them from the NRF node or by retrieving them from a memory 14 of the AMF node 10.

On the other hand, if an NF node that supports testing in the network is not available, then the AMF node 10 can select such an NF node to manage the first information. For example, it can be the case that the first information is affected by testing but the AMF node 10 fails to discover a suitable NF node that supports testing and, in such a case, the AMF node 10 may select any NF node in the normal way.

For completeness, it is noted that, if the first information is not affected by testing, then any NF node may be selected in the normal way.

However, in the embodiment illustrated in Figure 7, an NF node that supports testing can be selected and this is the SMF node 20. As illustrated by arrow 408 of Figure 7, the AMF node 10 transmits a first message towards the selected SMF node 20 and thus the SMF node 20 receives the first message. The first message comprises the first information. In the embodiment illustrated in Figure 7, the first information is the request for a service ("Service A") to be provided and thus the first message comprises this request. Advantageously, the first message also comprises an indication of whether an NF node that is to manage the first information is to be (e.g. needs to be) an NF node that supports testing in the network. This indication can be referred to herein as a "test indication" or "canary test indication".

The first message can, for example, comprise an indication that indicates whether the first information is under testing, e.g. with granularity to indicate one or more functionalities that may be under testing. The fact that the first information is under testing can be indicative that an NF node that is to manage the first information is to be an NF node that supports testing in the network. The indication about which one or more functionalities are under testing can allow the receiving NF node to later find another (next) NF node in the signalling path. It may be necessary to find another (next) NF node, for example, where the previous receiving NF node is indicated as supporting testing only for a certain functionality (or certain functionalities).

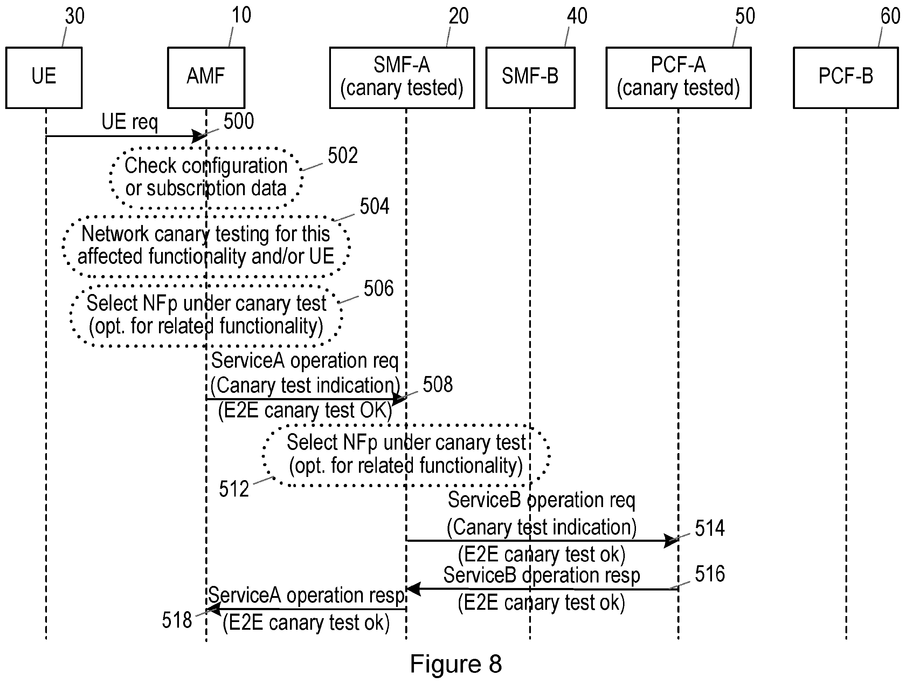

If an NF node that supports testing in the network is selected to manage the first information, as is the case in the embodiment illustrated in Figure 7, then the first message may also comprise an indication that the selected NF node supports testing in the network. Thus, the first message can comprise an indication of a successful selection. On the other hand, if an NF node that does not support testing in the network is selected to manage the first information, the first message may comprise no indication that signals an unsuccessful selection or an indication that selected NF node does not support testing in the network. In some embodiments, the AMF node 10 may comprise an indication both in the upstream request and downstream responses that an NF node supporting testing was not found and a regular one was used instead. The absence of an indication in a request/response regarding whether or not an NF node that supports testing was found can provide information that the NF node transmitting the request/response is not updated with the functionality described herein. For example, in this case, the NF node may be unable to include an indication of success or no-success. This can indicate that end-to-end testing is not executed, as explained in more detail with reference to Figure 8.

As illustrated by arrow 410 of Figure 7, the SMF node 20 may transmit a first response to the first message towards the AMF node 10 and thus the AMF node 10 receives the first response.

The SMF node 20 receiving the first message (whether it is a testing enabled NF as in this embodiment or a non-testing enabled NF selected because no testing enabled NFs were found by the AMF node 10) may know that the first information is under testing (and optionally what functionality is affected) based on the indication included in the first message. Then, the SMF node 20 behaves in the same way as the AMF node 10 from block 412 of Figure 7.

That is, if an NF node that supports testing in the network is available, then the SMF node 20 can select such an NF node to manage the first information. Thus, as illustrated by block 412 of Figure 7, the SMF node 20 may select the PCF node 50 to manage the first information. The PCF node 50 selected by the SMF node 20 supports testing in the network, e.g. for one or more functionalities and/or the UE 30 to which the first information corresponds. For example, the SMF node 20 can use optional information about one or more functionalities under testing (received in the first message) to be able to find a suitable NF node (e.g. that may be marked for testing only for a certain functionality or certain functionalities). The PCF node 50 may be selected from a plurality of NF nodes 40, 50, 60. In the embodiment illustrated in Figure 7, the first information is a request for a service to be provided and thus the PCF node 50 is selected to execute the request.

As illustrated by arrow 414 of Figure 7, the SMF node 20 transmits the first message towards the selected PCF node 50 and thus the PCF node 50 receives the first message. The first message comprises the first information. In the embodiment illustrated in Figure 7, the first information is the request for a service ("Service B") to be provided and thus the first message comprises this request. The request at step 414 of Figure 7 may be for the same service ("Service A") or a different (e.g. instance of the same) service ("Service B") to the service requested at step 408 of Figure 7. As illustrated by arrow 416 of Figure 7, the PCF node 50 transmits a second response to the first message towards the SMF node 20 and thus the SMF node 20 receives the second response.

Although not illustrated in Figure 7, it will be understood that multiple further interactions can be described similarly. Also, from one NF node, multiple interactions to other nodes are equally possible.

**Figure 8** is a signalling diagram illustrating an exchange of signals in a system according to an embodiment. The system illustrated in Figure 8 comprises a plurality of NF nodes 10, 20, 50. The plurality of NF nodes comprise an AMF node ("AMF") 10, an SMF node ("SMF-A") 20, and a PCF node ("PCF-A") 50. The AMF node 10 can be as described earlier with reference to Figures 2 and 3. The SMF node 20 can be as described earlier with reference to Figures 4 and 5. In the example illustrated in Figure 8, the AMF node 10 can also be referred to as a "client" or an "origin NF node", whereas the SMF node 20 and the PCF node 50 can each be referred to as a "server" or a "peer NF node".

As illustrated in Figure 8, in some embodiments, the system can comprise one or more other NF nodes 40, 60, such as at least one other SMF node ("SMF-B") 40 and/or at least one other PCF node ("PCF-B") 60. In some embodiments, the system may comprise multiple instances of the same SMF node 20, 40 and/or multiple instances of the same PCF node 50, 60. As illustrated in Figure 8, in some embodiments, the system can comprise an entity 30. For the purpose of the illustrated embodiment, the entity is a user equipment ("UE") 30.

Although examples of the types of nodes/entities and the number of nodes/entities have been provided with reference to Figure 8, it will be understood that the system may comprise any other types (or combination of types) of nodes/entities and any other number of nodes/entities. For example, the UE 30 may be replaced with an AF node and the AMF 10 may be replaced with an NEF.

Figure 8 is intended to illustrate an embodiment with an indication of whether end-to-end (E2E) testing (e.g. canary testing) execution is successful or unsuccessful.

At steps 500 to 508 and steps 512 to 516 of Figure 8, the method described earlier with respect to steps 400 to 408 and steps 412 to 416 of Figure 7 respectively are performed. In the embodiment illustrated in Figure 8, the response illustrated by arrow 516 is provided after the requested service ("Service B") is executed. It may depend on each specific procedure whether an immediate response is provided or the response is provided after further processing, e.g. in other NF nodes in the signalling path.

Although steps 500 to 508 and steps 512 to 516 of Figure 8 correspond to steps 400 to 408 and steps 412 to 416 of Figure 7 respectively, steps 508, 514 and 516 of Figure 8 involve the inclusion of another indication (e.g. "E2E test" or "E2E canary test") in addition to the "test indication" or "canary test indication". This additional indication is an indication of whether the selected NF node 20, 50 supports testing (e.g. canary testing) in the network.

Thus, as illustrated by arrow 508 of Figure 8, the first message transmitted from the AMF node 10 to the SMF node 20 additionally comprises an indication of whether the SMF node 20 supports testing in the network. Similarly, as illustrated by arrow 514 of Figure 8, the first message transmitted from the SMF node 20 to the PCF node 50 additionally comprises an indication of whether the PCF node 50 supports testing in the network. Also, as illustrated by arrow 516 of Figure 8, the second response transmitted from the PCF node 50 towards the SMF node 20 additionally comprises an indication of whether the PCF node 50 supports testing in the network.

Step 518 of Figure 8 corresponds to step 410 of Figure 7. However, as illustrated by arrow 518 of Figure 8, the first response to the first message transmitted by the SMF node 20 towards the AMF node 10 additionally comprises the indication of whether the PCF node 50 supports testing in the network.

In the embodiment illustrated in Figure 8, both the SMF node 20 and the PCF node 50 support testing and thus the indication is always that the relevant NF node supports testing (e.g. "E2E test OK" or "E2E canary test OK"). However, this may not always be the case and the indication may instead be that any one or more of the relevant NF nodes do not support testing (e.g. "E2E test non-OK" or "E2E canary test non-OK"). In this situation, the indication signals that the NF node that received the first message is not able to perform testing, e.g. it may be unable to perform the indicated testing task. This can, for example, happen where the NF node that received the first message is unable to find another NF node that supports testing, e.g. the indicated testing task.

If the indication of whether the selected NF node 20, 50 supports testing in the network is not included in a message, it may be interpreted by the NF node that receives that message that testing (e.g. E2E testing) has been unsuccessful, e.g. due to lack of support for the testing functionality by that receiving NF node. The indication of whether the selected NF node 20, 50 supports testing in the network can provide a key performance indicator (KPI) for the result of the testing. The NF nodes 10, 20, 50 can propagate the indication to have end-to-end KPI visibility.

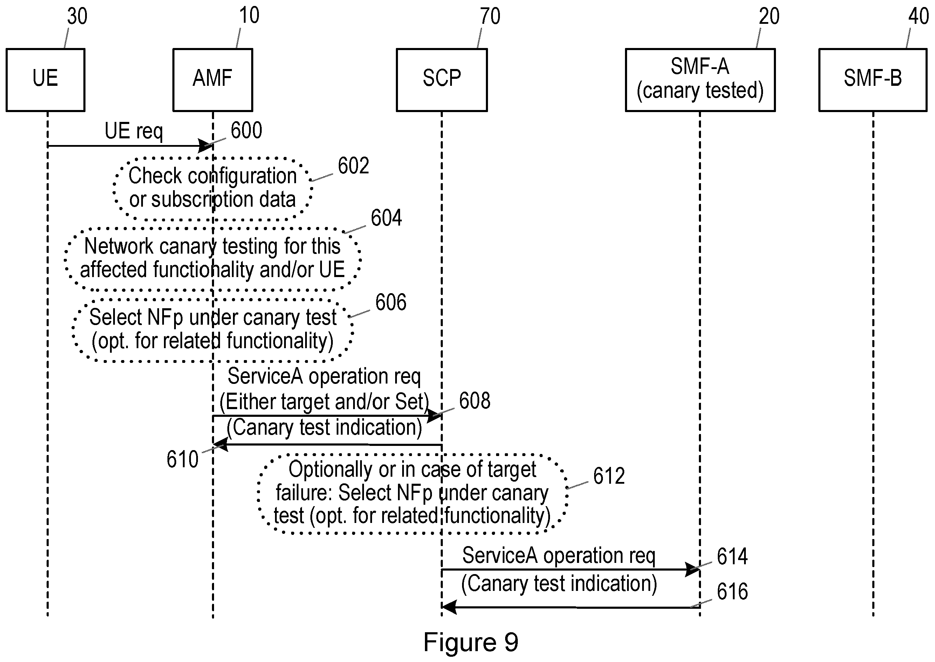

**Figure 9** is a signalling diagram illustrating an exchange of signals in a system according to an embodiment. The system illustrated in Figure 9 comprises a plurality of NF nodes 10, 20, 70. The plurality of NF nodes comprise an AMF node ("AMF") 10, an SMF node ("SMF-A") 20, and an SCP node ("SCP") 70. The SCP node 70 is configured to operate as an SCP between the AMF node 10 and the SMF node 20. The AMF node 10 can be as described earlier with reference to Figures 2 and 3. The SCP node 70 can be as described earlier with reference to Figures 4 and 5. In the example illustrated in Figure 9, the AMF node 10 can also be referred to as a "client" or an "origin NF node", whereas the SMF node 20 and the SCP node 70 can each be referred to as a "server" or a "peer NF node".

As illustrated in Figure 9, in some embodiments, the system can comprise one or more other NF nodes 40, such as at least one other SMF node ("SMF-B") 40. In some embodiments, the system may comprise multiple instances of the same SMF node 20, 40. As illustrated in Figure 9, in some embodiments, the system can comprise an entity 30. For the purpose of the illustrated embodiment, the entity is a user equipment ("UE") 30.

Although examples of the types of nodes/entities and the number of nodes/entities have been provided with reference to Figure 9, it will be understood that the system may comprise any other types (or combination of types) of nodes/entities and any other number of nodes/entities. For example, the UE 30 may be replaced with an AF node and the AMF 10 may be replaced with an NEF.

Figure 9 is intended to illustrate an embodiment involving an indirect communication model, such as that described earlier with reference to Figure 1C. The indirect communication model considers the introduction of the SCP 70 between the AMF node 10 and the SMF node 20. In the indirect communication model (without delegated discovery), the AMF node 10 is allowed to perform a discovery procedure with an NRF node to acquire NF profiles, including the profile of the SMF node 20. In the embodiment illustrated in Figure 9, the AMF node 10 can perform an initial selection of one or more NF nodes, e.g. based on functional attributes.

In some embodiments, the AMF node 10 may provide information about the one or more selected NF nodes to the SCP node 70. The SCP node 70 may be responsible for further selection of an NF node (e.g. within a provided set of NF nodes, if any). The information about an NF node can be, for example, an indication of an application programming interface (API) root of a uniform resource identifier (URI) to be used to reach the NF node and/or an indication of a set of NF nodes from which the NF node is to be selected. In the art, the API root of the uniform resource identifier URI can be referred to as the "sbi-target-apiroot" and the set of NF nodes can be referred to as the "sbi-target-nf-set".

In more detail, at steps 600 to 606 of Figure 9, the method described earlier with respect to steps 400 to 406 of Figure 7 respectively are performed. At step 608 of Figure 9, the method described earlier with respect to step 408 of Figure 7 is performed. However, the difference at step 608 of Figure 9 is that the AMF node 10 transmits the first message comprising the "test indication" or "canary test indication" towards the SCP node 70 and the first message additionally comprises the information about the one or more selected NF nodes. For example, in the embodiment illustrated in Figure 9, the first message can additionally comprise an indication of an API root of a URI to be used to reach the SMF node 20 and/or an indication of a set of NF nodes from which an NF node (e.g. the SMF node 20) is to be selected. Thus, in addition to the "test indication" or "canary test indication", the AMF node 10 may include sbi-target-apiroot and/or sbi-target-nf-set in the first message according to the embodiment illustrated in Figure 9. At step 610 of Figure 9, the SCP node 70 may transmit a first response to the first message towards the AMF node 10 and thus the AMF node 10 receives the first response.

Step 612 of Figure 9 is similar to step 412 of Figure 7 in terms of a selection of NF node being performed. However, as illustrated by block 612 of Figure 9, the SCP node 70 selects an NF node to manage the first information. For example, if the first message comprises an indication of an API root of a URI to be used to reach the SMF node 20, the SCP node 70 may select the SMF node 20. Alternatively, for example, if the first message comprises an indication of a set of NF nodes from which an NF node is to be selected, the SCP node 70 may select an NF node from this set of NF nodes and this is the SMF node 20 in the embodiment illustrated in Figure 9. Thus, the SCP node 70 can perform a selection within an indicated set of NF nodes according to some embodiments. The SCP node 70 selects an NF node according to the indication(s) that it receives from the AMF node 10. That is, the NF node selected may need to support testing, e.g. for one or more indicated functionalities. In the embodiment illustrated in Figure 9, the NF node selected is to support testing and thus the SMF node 20 is selected as it supports testing.

Steps 614 and 616 of Figure 9 are similar to steps 414 and 416 of Figure 7 respectively. However, for completeness, as illustrated by arrow 614 of Figure 9, the SCP node 70 transmits the first message comprising the "test indication" or "canary test indication" towards the SMF node 20 and thus the SMF node 20 receives the first message. As illustrated by arrow 616 of Figure 9, the SMF node 20 transmits a second response to the first message towards the SCP node 70 and thus the SCP node 70 receives the second response.

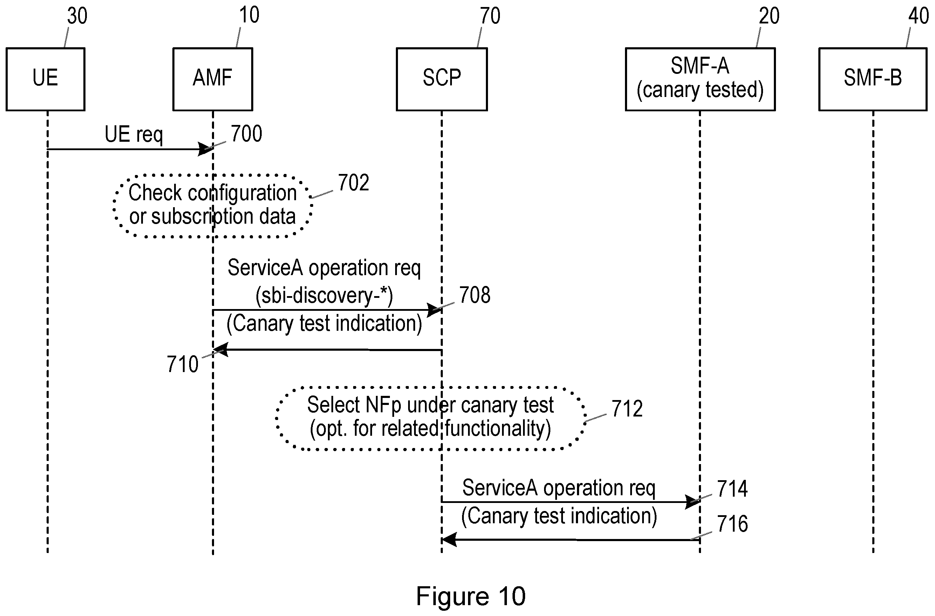

**Figure 10** is a signalling diagram illustrating an exchange of signals in a system according to an embodiment. The system illustrated in Figure 10 comprises a plurality of NF nodes 10, 20, 70. The plurality of NF nodes comprise an AMF node ("AMF") 10, an SMF node ("SMF-A") 20, and an SCP node ("SCP") 70. The SCP node 70 is configured to operate as an SCP between the AMF node 10 and the SMF node 20. The AMF node 10 can be as described earlier with reference to Figures 2 and 3. The SCP node 70 can be as described earlier with reference to Figures 4 and 5. In the example illustrated in Figure 10, the AMF node 10 can also be referred to as a "client" or an "origin NF node", whereas the SMF node 20 and the SCP node 70 can each be referred to as a "server" or a "peer NF node".

As illustrated in Figure 10, in some embodiments, the system can comprise one or more other NF nodes 40, such as at least one other SMF node ("SMF-B") 40. In some embodiments, the system may comprise multiple instances of the same SMF node 20, 40. As illustrated in Figure 10, in some embodiments, the system can comprise an entity 30. For the purpose of the illustrated embodiment, the entity is a user equipment ("UE") 30.

Although examples of the types of nodes/entities and the number of nodes/entities have been provided with reference to Figure 10, it will be understood that the system may comprise any other types (or combination of types) of nodes/entities and any other number of nodes/entities. For example, the UE 30 may be replaced with an AF node and the AMF 10 may be replaced with an NEF.

Figure 10 is intended to illustrate an embodiment involving an indirect communication model, such as that described earlier with reference to Figure 1D. The indirect communication model considers the introduction of the SCP 70 between the AMF node 10 and the SMF node 20. In the indirect communication model (with delegated discovery), the AMF node 10 is not allowed to perform a discovery procedure with an NRF node to acquire NF profiles. Thus, instead, the AMF node 10 provides information to the SCP node 70 to allow the SCP node 70 to perform such a discovery procedure. In the embodiment illustrated in Figure 10, the SCP node 70 can perform an initial selection (and, if required, a reselection) of one or more NF nodes, e.g. based on functional attributes.

In more detail, at steps 700 to 702 of Figure 10, the method described earlier with respect to steps 400 to 402 of Figure 7 respectively are performed. At step 708 of Figure 10, the method described earlier with respect to step 408 of Figure 7 is performed. However, the difference at step 708 of Figure 10 is that the AMF node 10 transmits the first message comprising the "test indication" or "canary test indication" towards the SCP node 70 and the first message additionally comprises one or more parameters on the basis of which an NF node is to be selected. In the art, the one or more parameters can be referred to as one or more "sbi-discovery-*" parameters. The one or more parameters can, for example, comprise a parameter ("sbi-discovery-target-nf-type") indicative of a type of NF node (e.g. SMF node, PCF node, etc.) that is to be selected. At step 710 of Figure 10, the SCP node 70 may transmit a first response to the first message towards the AMF node 10 and thus the AMF node 10 receives the first response.

Step 712 of Figure 10 is similar to step 412 of Figure 7 in terms of a selection of NF node being performed. However, as illustrated by block 712 of Figure 10, the SCP node 70 selects an NF node to manage the first information. The one or more parameters allow the SCP node 70 to perform a selection (and, if needed, a reselection) of an NF node to manage the first information. For example, the SCP node 70 may perform a discovery procedure with an NRF node to acquire NF profiles based on the one or more parameters (e.g. the NF profile(s) that comprise an attribute matching the one or more parameters), which can include a profile for the SMF node 20. The SCP node 70 can then select an NF node from the NF node(s) for which a profile is acquired. The SCP node 70 selects an NF node according to the indication(s) that it receives from the AMF node 10. That is, the NF node selected may need to support testing, e.g. for one or more indicated functionalities. In the embodiment illustrated in Figure 10, the NF node selected is to support testing and thus the SMF node 20 is selected as it supports testing.

Steps 714 and 716 of Figure 10 are similar to steps 414 and 416 of Figure 7 respectively. However, for completeness, as illustrated by arrow 714 of Figure 10, the SCP node 70 transmits the first message comprising the "test indication" or "canary test indication" towards the SMF node 20 and thus the SMF node 20 receives the first message. As illustrated by arrow 716 of Figure 10, the SMF node 20 transmits a second response to the first message towards the SCP node 70 and thus the SCP node 70 receives the second response.

The techniques described herein thus relate to testing (e.g. canary testing) in a network. This can also be referred to as network (e.g. canary) testing. In some embodiments, the techniques described herein can be based on an identification by the origin NF node (e.g. the first NF node 10 referred to herein) of whether the first information (e.g. the request) referred to herein is subject to testing. For example, this can be based on local configuration at the origin NF node or on a subscription for the entity 30 to which the first information corresponds, which may be obtained from a UDM node according to some embodiments (e.g. at registration of the origin NF node at the UDM node). In some embodiments, the testing may be defined only for one or more specific entities (e.g. UEs) and/or one or more specific functionalities. It may be that only part of the network traffic is routed via one or more NFs that support testing.

If the first information (e.g. the request) referred to herein is subject to network testing, then the origin NF node can select among the suitable NF nodes one that is configured as "supporting testing" (e.g. "under testing" or "under canary testing") for that NF node to manage the first information. An indication of whether an NF node supports testing can be part of the NF profile, such as the NF profile that is registered in an NRF node. As an option, the indication may include one or more potentially under testing functionalities. Thus, testing of multiple functionalities in the network can be allowed (e.g. simultaneously). If no NF node that supports testing is found, any other node can be selected.

For network traffic that is not identified as under testing, it may be that an NF node identified as supporting testing is not selected. In this case, the origin NF node may include an indication in the first message that is sent to the selected NF node. This indication can identify that network testing is ongoing for this first information and can optionally also indicate one or more specific functionalities to which it applies.

The peer NF node (e.g. the second NF node 20, 50, 70 referred to herein) that receives the first information (e.g. the request) referred to herein can behave as if it were the origin NF node. That is, the peer NF node may itself select a peer NF node, e.g. following the same testing criteria. It may be that the origin NF node sends multiple first messages towards multiple peer NF nodes according to some embodiments and the behaviour of each peer NF node may be similar.

A definition of the one or more functionalities (or features) referred to herein that may be under testing will now be described.

The one or more functionalities (or features) referred to herein can be provided (e.g. as a list) in an NF profile. Thus, a first definition is provided for the one or more functionalities in the NF profile. In this respect, the one or more functionalities can be encoded in the NF profile in different ways. In some embodiments, the one or more functionalities can be encoded using the "customInfo" attribute of the NF profile defined in 3GPP TS 29.510 V17.4.0. The format of the (e.g. list of) one or more functionalities can be implementation-specific. In some embodiments, the one or more functionalities can be encoded by defining a new attribute in the NF profile defined in sections 6.1.6.2.2 and 6.2.6.2.3 of 3GPP TS 29.510 V17.4.0. For example, the one or more functionalities may be defined as follows:

| **Attribute name** | **Data type** | **P** | **Cardinality** | **Description** |
|---|---|---|---|---|
| canaryFeatures | Array(CanaryFeatureType) | O | 1..N | List of (e.g. canary) features under test |

A new "CanaryFeatureType" may also be defined as follows:

| **Attribute name** | **Data type** | **P** | **Cardinality** | **Description** |
|---|---|---|---|---|
| canaryFeatureName | string | M | 1 | Unique feature name for the canary test |
| impactedNfTypes | array(N FType) | M | 1 | Type of Network Function which involve in the canary test call flow |

The one or more functionalities (or features) referred to herein can be provided (e.g. as a list) in the first message, which can be an SBI request or any other request. Thus, a second definition is provided for the one or more functionalities in the first message. In this respect, the first message can comprise a header (e.g. a hypertext transfer protocol (HTTP) header) and the header can comprise the one or more functionalities. For example, the one or more functionalities (or features) may be defined as follows:
Name: X-3GPP-Canary-Features
Value: List of comma-separated feature names and impacted NF types to be canary-tested for the request
Example: X-3GPP-Canary-Features: featureA(NF-X,NF-Y),feature(NF-X)

The technique described herein provides a mechanism to support network testing (e.g. canary testing). In some embodiments, the technique described herein can be based on the identification by an origin NF node 10 of whether the first information (e.g. request/interaction received) corresponds to an entity 30 and/or functionality under testing. In some embodiments, the peer NF nodes 20, 50, 70 can be configured with an indication of whether they support testing.

In the manner described herein, testing can be considered at network level, which can be particularly beneficial. For example, in order to test an upgraded network functionality, it is beneficial for the signalling path to traverse all the NF types and/or NF service types that have been upgraded (e.g. as part of the same network functionality upgrade). Otherwise, the functionality may only be partially tested and unwanted effects in the signalling may occur. On the other hand, a software upgrade is generally not performed for individual functionalities (or corrections) and instead periodic software upgrades can be planned, e.g. as part of a package of functionalities. This can be, for example, every 3 months. This means that, in some cases, it is possible that a software upgrade can impact multiple (e.g. many, if not all) the NF types and/or NF service types in the network. Thus, testing at network level is advantageous and there is provided herein a mechanism to support that.

The mechanism provides various technical advantages. For example, the mechanism can provide support for network testing that may be required by customers. The mechanism can allow testing from the origin and/or can involve one or more (e.g. multiple or all) NF nodes that support testing in the signalling path. The network testing may be based on a limited amount of entities (e.g. UEs), which may even be selected among specific entities that are defined for testing, thereby limiting impact if there is any failure. In case there is partitioning (or segmentation) in the network, the mechanism can allow the testing to be constrained to one or more specific partitions (or segments) in the network if required. The mechanism can allow a determination to be made that one or more functionalities are under testing and then, for example, only first information (e.g. requests) specific for the one or more functionalities may be routed to one or more NF nodes that support testing. This can allow control over the impacts of testing in case of error.

There is also provided a computer program comprising instructions which, when executed by processing circuitry (such as the processing circuitry 12 of the first NF node 10 described earlier and/or the processing circuitry 22 of the second NF node 20, 50, 70 described earlier), cause the processing circuitry to perform at least part of the method described herein. There is provided a computer program product, embodied on a non-transitory machine-readable medium, comprising instructions which are executable by processing circuitry (such as the processing circuitry 12 of the first NF node 10 described earlier and/or the processing circuitry 22 of the second NF node 20, 50, 70 described earlier) to cause the processing circuitry to perform at least part of the method described herein. There is provided a computer program product comprising a carrier containing instructions for causing processing circuitry (such as the processing circuitry 12 of the first NF node 10 described earlier and/or the processing circuitry 22 of the second NF node 20, 50, 70 described earlier) to perform at least part of the method described herein.

In some embodiments, the carrier can be any one of an electronic signal, an optical signal, an electromagnetic signal, an electrical signal, a radio signal, a microwave signal, or a computer-readable storage medium.

In some embodiments, the node functionality described herein can be performed by hardware. Thus, in some embodiments, any one or more of the first NF node 10, the second NF node 20, the third NF node 50, and the SCP node 70 described herein can be a hardware node. However, it will also be understood that optionally at least part or all of the node functionality described herein can be virtualized. For example, the functions performed by any one or more of the first NF node 10, the second NF node 20, the third NF node 50, and the SCP node 70 described herein can be implemented in software running on generic hardware that is configured to orchestrate the node functionality. Thus, in some embodiments, any one or more of the first NF node 10, the second NF node 20, the third NF node 50, and the SCP node 70 described herein can be a virtual node. In some embodiments, at least part or all of the node functionality described herein may be performed in a network enabled cloud. The node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically. The method described herein can be a computer-implemented method.

Thus, in the manner described herein, there is advantageously provided an improved technique for handling messages in a network.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for handling messages in a network, wherein the method is performed by a first network function, NF, node (10) in the network, the method comprising:
initiating transmission (202) of a first message (408, 508, 608, 708) towards a second NF node (20, 70) in the network in response to an event (400, 500, 600, 700) that signals first information is to be managed by a third NF node (20) in the network,
wherein the first message (408, 508, 608, 708) comprises the first information and an indication of whether the third NF node (20, 50) is to be an NF node that supports testing in the network, wherein the first message (408, 508, 608, 708) comprises the indication for the third NF node (20, 50) to take it into account when managing the first information.

2. A method as claimed in claim 1, wherein:
the first information corresponds to one or more functionalities that are under testing in the network and the first message (408, 508, 608, 708) comprises an indication of the one or more functionalities that are under testing in the network; and/or
the method comprises checking (402, 502, 602, 702) whether the third NF node (20, 50) is to be an NF node that supports testing in the network by checking whether second information stored in a memory is indicative that the third NF node (20, 50) is to be an NF node that supports testing in the network, wherein the second information stored in the memory is a profile of an entity (30) to which the first information corresponds and the profile comprises an attribute indicative of whether the third NF node (20, 50) is to be an NF node that supports testing in the network.

3. A method as claimed in claim 2, the method comprising:
acquiring an identifier for the entity (30) to which the first information corresponds and identifying the profile of the entity (30) using the identifier, wherein the profile of the entity (30) comprises the identifier.

4. A method as claimed in any of the preceding claims, the method comprising:
selecting (406, 506, 606) the third NF node (20, 50) to manage the first information, wherein:
an NF node that supports testing in the network is available; and
selecting (406, 506, 606) the third NF node (20, 50) to manage the first information comprises selecting the third NF node (20, 50) to be an NF node that supports testing in the network.

5. A method as claimed in claim 4, wherein:
the first message (408, 508, 608, 708) comprises an indication that the third NF node (20, 50) supports testing in the network; and/or
selecting (406, 506, 606) the third NF node (20, 50) to be an NF node that supports testing in the network comprises selecting the third NF node (20, 50) to be an NF node having a profile comprising one or more attributes indicative that the NF node supports testing in the network.

6. A method as claimed in claim 5, wherein:
the profile comprises a plurality of attributes and each attribute of the plurality of attributes is indicative that the NF node supports testing in the network in respect of a different functionality.

7. A method as claimed in any of claims 1 to 3, the method comprising:
selecting (406, 506, 606) the third NF node (20, 50) to manage the first information, wherein:
an NF node that supports testing in the network is not available; and
selecting (406, 506, 606) the third NF node (20, 50) to manage the first information comprises selecting the third NF node (20, 50) to be an NF node that does not support testing in the network.

8. A method as claimed in claim 7, wherein:
the first message comprises an indication that the third NF node (20, 50) does not support testing in the network.

9. A method for handling messages in a network, wherein the method is performed by a second network function, NF, node (20, 50, 70) in the network, the method comprising:
receiving (302) a first message (408, 508, 608, 708, 414, 514, 614, 714) from a first NF node (10) in the network in response to an event (400, 500, 600, 700) that signals first information is to be managed by a third NF node (20, 50) in the network,
wherein the first message (408, 508, 608, 708, 414, 514, 614, 714) comprises the first information and an indication of whether the third NF node (20, 50) is to be an NF node that supports testing in the network, wherein the first message (408, 508, 608, 708, 414, 514, 614, 714) comprises the indication for the third NF node (20, 50) to take it into account when managing the first information.

10. A method as claimed in claim 9, wherein:
the first information corresponds to one or more functionalities that are under testing in the network and the first message (408, 508, 608, 708, 414, 514, 614, 714) comprises an indication of the one or more functionalities that are under testing in the network; and/or
the first message (408, 508, 608, 708, 414, 514, 614, 714) comprises an indication of whether the third NF node (20, 50) supports testing in the network.

11. A method as claimed in claim 9 or 10, the method comprising:
selecting (412, 512, 612, 712) the third NF node (20, 50) to manage the first information, wherein:
an NF node that supports testing in the network is available; and
selecting (412, 512, 612, 712) the third NF node (20, 50) to manage the first information comprises selecting the third NF node (20, 50) to be an NF node that supports testing in the network.

12. A method as claimed in claim 11, wherein:
selecting (412, 512, 612, 712) the third NF node (20, 50) to be an NF node that supports testing in the network comprises:
selecting the third NF node (20, 50) to be an NF node having a profile comprising one or more attributes indicative that the NF node supports testing in the network.

13. A method as claimed in claim 12, wherein:
the profile comprises a plurality of attributes and each attribute of the plurality of attributes is indicative that the NF node supports testing in the network in respect of a different functionality.

14. A method as claimed in claim 9 or 10, the method comprising:
selecting (412, 512, 612, 712) the third NF node (20, 50) to manage the first information, wherein:
an NF node that supports testing in the network is not available; and
selecting (412, 512, 612, 712) the third NF node (20, 50) to manage the first information comprises selecting the third NF node (20, 50) to be an NF node that does not support testing in the network.

15. A network function, NF, node (10, 20, 50, 70) comprising:
processing circuitry (12, 22) configured to operate in accordance with any of claims 1 to 8, or any of claims 9 to 14.

## Patentansprüche

1. Verfahren zur Handhabung von Nachrichten in einem Netzwerk, wobei das Verfahren von einem ersten Knoten (10) mit Netzwerkfunktion, NF, in dem Netzwerk durchgeführt wird, wobei das Verfahren Folgendes umfasst:
Initiieren der Übertragung (202) einer ersten Nachricht (408, 508, 608, 708) an einen zweiten NF-Knoten (20, 70) in dem Netzwerk in Reaktion auf ein Ereignis (400, 500, 600, 700), das signalisiert, dass erste Informationen von einem dritten NF-Knoten (20) in dem Netzwerk verwaltet werden sollen,
wobei die erste Nachricht (408, 508, 608, 708) die ersten Informationen und eine Angabe dessen umfasst, ob der dritte NF-Knoten (20, 50) ein NF-Knoten sein soll, der Tests in dem Netzwerk unterstützt, wobei die erste Nachricht (408, 508, 608, 708) die Angabe für den dritten NF-Knoten (20, 50) umfasst, damit er sie bei der Verwaltung der ersten Informationen berücksichtigt.

2. Verfahren nach Anspruch 1, wobei:
die ersten Informationen einer oder mehreren Funktionalitäten entsprechen, die in dem Netzwerk getestet werden, und die erste Nachricht (408, 508, 608, 708) eine Angabe der einen oder der mehreren Funktionalitäten umfasst, die in dem Netzwerk getestet werden; und/oder
das Verfahren Prüfen (402, 502, 602, 702), ob der dritte NF-Knoten (20, 50) ein NF-Knoten sein soll, der Tests in dem Netzwerk unterstützt, durch Prüfen umfasst, ob zweite Informationen, die in einem Speicher gespeichert sind, angeben, dass der dritte NF-Knoten (20, 50) ein NF-Knoten sein soll, der Tests in dem Netzwerk unterstützt, wobei es sich bei den zweiten Informationen, die in dem Speicher gespeichert sind, um ein Profil einer Entität (30) handelt, der die ersten Informationen entsprechen, und wobei das Profil ein Attribut umfasst, das angibt, ob der dritte NF-Knoten (20, 50) ein NF-Knoten sein soll, der Tests unterstützt.

3. Verfahren nach Anspruch 2, wobei das Verfahren Folgendes umfasst:
Erfassen einer Kennung für die Entität (30), der die ersten Informationen entsprechen, und Identifizieren des Profils der Entität (30) unter Verwendung der Kennung, wobei das Profil der Entität (30) die Kennung umfasst.

4. Verfahren nach einem der vorhergehenden Ansprüche, wobei das Verfahren Folgendes umfasst:
Auswählen (406, 506, 606) des dritten NF-Knotens (20, 50) zum Verwalten der ersten Informationen, wobei:
ein NF-Knoten, der Tests in dem Netzwerk unterstützt, verfügbar ist; und
das Auswählen (406, 506, 606) des dritten NF-Knotens (20, 50) zum Verwalten der ersten Informationen Auswählen des dritten NF-Knotens (20, 50) als NF-Knoten umfasst, der Tests in dem Netzwerk unterstützt.

5. Verfahren nach Anspruch 4, wobei:
die erste Nachricht (408, 508, 608, 708) eine Angabe umfasst, dass der dritte NF-Knoten (20, 50) Tests in dem Netzwerk unterstützt; und/oder
das Auswählen (406, 506, 606) des dritten NF-Knotens (20, 50) als NF-Knoten, der Tests in dem Netzwerk unterstützt, Auswählen des dritten NF-Knotens(20, 50) als NF-Knoten mit einem Profil umfasst, das ein oder mehrere Attribute umfasst, die angeben, dass der NF-Knoten Tests in dem Netzwerk unterstützt.

6. Verfahren nach Anspruch 5, wobei:
das Profil eine Mehrzahl von Attributen umfasst und jedes Attribut der Mehrzahl von Attributen angibt, dass der NF-Knoten Tests in dem Netzwerk in Bezug auf eine andere Funktionalität unterstützt.

7. Verfahren nach einem der Ansprüche 1 bis 3, wobei das Verfahren Folgendes umfasst:
Auswählen (406, 506, 606) des dritten NF-Knotens (20, 50) zum Verwalten der ersten Informationen, wobei:
kein NF-Knoten, der Tests in dem Netzwerk unterstützt, verfügbar ist; und
das Auswählen (406, 506, 606) des dritten NF-Knotens (20, 50) zum Verwalten der ersten Informationen Auswählen des dritten NF-Knotens (20, 50) als NF-Knoten umfasst, der keine Tests in dem Netzwerk unterstützt.

8. Verfahren nach Anspruch 7, wobei:
die erste Nachricht eine Angabe dessen umfasst, dass der dritte NF-Knoten (20, 50) keine Tests in dem Netzwerk unterstützt.

9. Verfahren zur Handhabung von Nachrichten in einem Netzwerk, wobei das Verfahren von einem zweiten Knoten (20, 50, 70) mit Netzwerkfunktion, NF, in dem Netzwerk durchgeführt wird, wobei das Verfahren Folgendes umfasst:
Empfangen (302) einer ersten Nachricht (408, 508, 608, 708, 414, 514, 614, 714) von einem ersten NF-Knoten (10) in dem Netzwerk in Reaktion auf ein Ereignis (400, 500, 600, 700), das signalisiert, dass erste Informationen von einem dritten NF-Knoten (20, 50) in dem Netzwerk verwaltet werden sollen,
wobei die erste Nachricht (408, 508, 608, 708, 414, 514, 614, 714) die ersten Informationen und eine Angabe dessen umfasst, ob der dritte NF-Knoten (20, 50) ein NF-Knoten sein soll, der Tests in dem Netzwerk unterstützt, wobei die erste Nachricht (408, 508, 608, 708, 414, 514, 614, 714) die Angabe für den dritten NF-Knoten (20, 50) umfasst, damit er sie bei der Verwaltung der ersten Informationen berücksichtigt.

10. Verfahren nach Anspruch 9, wobei:
die ersten Informationen einer oder mehreren Funktionalitäten entsprechen, die in dem Netzwerk getestet werden, und die erste Nachricht (408, 508, 608, 708, 414, 514, 614, 714) eine Angabe der einen oder der mehreren Funktionalitäten umfasst, die in dem Netzwerk getestet werden; und/oder
die erste Nachricht (408, 508, 608, 708, 414, 514, 614, 714) eine Angabe dessen umfasst, ob der dritte NF-Knoten (20, 50) Tests in dem Netzwerk unterstützt.

11. Verfahren nach Anspruch 9 oder 10, wobei das Verfahren Folgendes umfasst:
Auswählen (412, 512, 612, 712) des dritten NF-Knotens (20, 50) zum Verwalten der ersten Informationen, wobei:
ein NF-Knoten, der Tests in dem Netzwerk unterstützt, verfügbar ist; und
das Auswählen (412, 512, 612, 712) des dritten NF-Knotens (20, 50) zum Verwalten der ersten Informationen Auswählen des dritten NF-Knotens (20, 50) als NF-Knoten umfasst, der Tests in dem Netzwerk unterstützt.

12. Verfahren nach Anspruch 11, wobei:
das Auswählen (412, 512, 612, 712) des dritten NF-Knotens (20, 50) als NF-Knoten, der Tests in dem Netzwerk unterstützt, Folgendes umfasst:
Auswählen des dritten NF-Knotens (20, 50) als NF-Knoten mit einem Profil, das ein oder mehrere Attribute umfasst, die angeben, dass der NF-Knoten Tests in dem Netzwerk unterstützt.

13. Verfahren nach Anspruch 12, wobei:
das Profil eine Mehrzahl von Attributen umfasst und jedes Attribut der Mehrzahl von Attributen angibt, dass der NF-Knoten Tests in dem Netzwerk in Bezug auf eine andere Funktionalität unterstützt.

14. Verfahren nach Anspruch 9 oder 10, wobei das Verfahren Folgendes umfasst:
Auswählen (412, 512, 612, 712) des dritten NF-Knotens (20, 50) zum Verwalten der ersten Informationen, wobei:
kein NF-Knoten, der Tests in dem Netzwerk unterstützt, verfügbar ist; und
das Auswählen (412, 512, 612, 712) des dritten NF-Knotens (20, 50) zum Verwalten der ersten Informationen Auswählen des dritten NF-Knotens (20, 50) als NF-Knoten umfasst, der keine Tests in dem Netzwerk unterstützt.

15. Knoten mit Netzwerkfunktion, NF, (10, 20, 50, 70) umfassend:
Verarbeitungsschaltungsanordnung (12, 22), die so ausgelegt ist, dass sie nach einem der Ansprüche 1 bis 8 oder 9 bis 14 funktioniert.

## Revendications

1. Procédé de gestion de messages dans un réseau, dans lequel le procédé est réalisé par un premier nœud de fonction de réseau, NF, (10) dans le réseau, le procédé comprenant :
l'initiation d'une transmission (202) d'un premier message (408, 508, 608, 708) vers un deuxième nœud NF (20, 70) dans le réseau en réponse à un événement (400, 500, 600, 700) qui signale que des premières informations doivent être gérées par un troisième nœud NF (20) dans le réseau,
dans lequel le premier message (408, 508, 608, 708) comprend les premières informations et une indication indiquant si le troisième nœud NF (20, 50) doit être un nœud NF prenant en charge des tests dans le réseau, dans lequel le premier message (408, 508, 608, 708) comprend l'indication que le troisième nœud NF (20, 50) doit le prendre en compte lors de la gestion des premières informations.

2. Procédé selon la revendication 1, dans lequel :
les premières informations correspondent à une ou plusieurs fonctionnalités qui font l'objet de tests dans le réseau et le premier message (408, 508, 608, 708) comprend une indication des une ou plusieurs fonctionnalités qui font l'objet de tests dans le réseau ; et/ou
le procédé comprend la vérification (402, 502, 602, 702) si le troisième nœud NF (20, 50) doit être un nœud NF qui prend en charge des tests dans le réseau par la vérification si des deuxièmes informations stockées dans une mémoire indiquent que le troisième nœud NF (20, 50) doit être un nœud NF prenant en charge des tests dans le réseau, dans lequel les deuxièmes informations stockées dans la mémoire sont un profil d'une entité (30) à laquelle correspondent les premières informations et le profil comprend un attribut indiquant si le troisième nœud NF (20, 50) doit être un nœud NF prenant en charge des tests dans le réseau.

3. Procédé selon la revendication 2, le procédé comprenant :
l'acquisition d'un identifiant de l'entité (30) à laquelle correspondent les premières informations et l'identification du profil de l'entité (30) à l'aide de l'identifiant, dans lequel le profil de l'entité (30) comprend l'identifiant.

4. Procédé selon l'une quelconque des revendications précédentes, le procédé comprenant :
la sélection (406, 506, 606) du troisième nœud NF (20, 50) pour gérer les premières informations, dans lequel :
un nœud NF prenant en charge des tests dans le réseau est disponible ; et
la sélection (406, 506, 606) du troisième nœud NF (20, 50) pour gérer les premières informations comprend la sélection du troisième nœud NF (20, 50) pour qu'il soit un nœud NF prenant en charge des tests dans le réseau.

5. Procédé selon la revendication 4, dans lequel :
le premier message (408, 508, 608, 708) comprend une indication que le troisième nœud NF (20, 50) prend en charge des tests dans le réseau ; et/ou
la sélection (406, 506, 606) du troisième nœud NF (20, 50) pour qu'il soit un nœud NF prenant en charge des tests dans le réseau comprend la sélection du troisième nœud NF (20, 50) pour qu'il soit un nœud NF présentant un profil comprenant un ou plusieurs attributs indiquant que le nœud NF prend en charge des tests dans le réseau.

6. Procédé selon la revendication 5, dans lequel :
le profil comprend une pluralité d'attributs et chaque attribut de la pluralité d'attributs indique que le nœud NF prend en charge des tests dans le réseau en ce qui concerne une fonctionnalité différente.

7. Procédé selon l'une quelconque des revendications 1 à 3, le procédé comprenant :
la sélection (406, 506, 606) du troisième nœud NF (20, 50) pour gérer les premières informations, dans lequel :
un nœud NF prenant en charge des tests dans le réseau n'est pas disponible ; et
la sélection (406, 506, 606) du troisième nœud NF (20, 50) pour gérer les premières informations comprend la sélection du troisième nœud NF (20, 50) pour qu'il soit un nœud NF ne prenant pas en charge de tests dans le réseau.

8. Procédé selon la revendication 7, dans lequel :
le premier message comprend une indication que le troisième nœud NF (20, 50) ne prend pas en charge de tests dans le réseau.

9. Procédé de gestion de messages dans un réseau, dans lequel le procédé est réalisé par un deuxième nœud de fonction de réseau, NF, (20, 50, 70) dans le réseau, le procédé comprenant :
la réception (302) d'un premier message (408, 508, 608, 708, 414, 514, 614, 714) depuis un premier nœud NF (10) dans le réseau en réponse à un événement (400, 500, 600, 700) qui signale que des premières informations doivent être gérées par un troisième nœud NF (20) dans le réseau,
dans lequel le premier message (408, 508, 608, 708, 414, 514, 614, 714) comprend les premières informations et une indication indiquant si le troisième nœud NF (20, 50) doit être un nœud NF prenant en charge des tests dans le réseau, dans lequel le premier message (408, 508, 608, 708, 414, 514, 614, 714) comprend l'indication que le troisième nœud NF (20, 50) doit le prendre en compte lors de la gestion des premières informations.

10. Procédé selon la revendication 9, dans lequel :
les premières informations correspondent à une ou plusieurs fonctionnalités qui font l'objet de tests dans le réseau et le premier message (408, 508, 608, 708, 414, 514, 614, 714) comprend une indication des une ou plusieurs fonctionnalités qui font l'objet de tests dans le réseau ; et/ou
le premier message (408, 508, 608, 708, 414, 514, 614, 714) comprend une indication indiquant si le troisième nœud NF (20, 50) prend en charge des tests dans le réseau.

11. Procédé selon la revendication 9 ou 10, le procédé comprenant :
la sélection (412, 512, 612, 712) du troisième nœud NF (20, 50) pour gérer les premières informations, dans lequel :
un nœud NF qui prend en charge des tests dans le réseau est disponible ; et
la sélection (412, 512, 612, 712) du troisième nœud NF (20, 50) pour gérer les premières informations comprend la sélection du troisième nœud NF (20, 50) pour qu'il soit un nœud NF prenant en charge des tests dans le réseau.

12. Procédé selon la revendication 11, dans lequel :
la sélection (412, 512, 612, 712) du troisième nœud NF (20, 50) pour qu'il soit un nœud NF prenant en charge des tests dans le réseau comprend :
la sélection du troisième nœud NF (20, 50) pour qu'il soit un nœud NF présentant un profil comprenant un ou plusieurs attributs indiquant que le nœud NF prend en charge des tests dans le réseau.

13. Procédé selon la revendication 12, dans lequel :
le profil comprend une pluralité d'attributs et chaque attribut de la pluralité d'attributs indique que le nœud NF prend en charge des tests dans le réseau en ce qui concerne une fonctionnalité différente.

14. Procédé selon la revendication 9 ou 10, le procédé comprenant :
la sélection (412, 512, 612, 712) du troisième nœud NF (20, 50) pour gérer les premières informations, dans lequel :
un nœud NF prenant en charge des tests dans le réseau n'est pas disponible ; et
la sélection (412, 512, 612, 712) du troisième nœud NF (20, 50) pour gérer les premières informations comprend la sélection du troisième nœud NF (20, 50) pour qu'il soit un nœud NF ne prenant pas en charge de tests dans le réseau.

15. Nœud de fonction de réseau, NF, (10, 20, 50, 70) comprenant :
une circuiterie de traitement (12, 22) configurée pour fonctionner selon l'une quelconque des revendications 1 à 8 ou l'une quelconque des revendications 9 à 14.
